# EUROPEAN PATENT SPECIFICATION

(11) **EP 1 611 197 B1**
(45) Date of publication and mention of the grant of the patent: **21.03.2012**
(21) Application number: 04724025.4
(22) Date of filing: 29.03.2004
(51) Int. Cl.: C04B 40/00, C08F 8/42, C08K 5/00, C08F 220/36, C08F 293/00, C08F 246/00, C08L 53/00, C09D 7/02, C09D 11/00, C09D 11/02, C09D 153/00, C09D 17/00, C09J 153/00, C09B 67/00

(54) **LIGHT STABILISING POLYMER DISPERSANTS IN PIGMENT DISPERSIONS**
LICHTSTABILISIERENDE POLYMERDISPERGIERMITTEL IN PIGMENTDISPERSIONEN
DISPERSANTS POLYMERES PHOTOSTABILISANTS DANS DES DISPERSIONS DE PIGMENTS

(30) Priority: 08.04.2003 EP 03405235
(43) Date of publication of application: 04.01.2006
(73) Proprietor: BASF SE, 67056 Ludwigshafen (DE)
(72) Inventor: VOGEL, Thomas, 79576 Haltingen (DE); SODER, Sibylle, 4313 Möhlin (CH); SIMMENDINGER, Peter, 4052 Basel (CH)
(86) International application number: PCT/EP2004/050386
(87) International publication number: WO 2004/090030

(56) References cited:
- WO-A-00/40630
- WO-A-03/046029
- US-A- 4 656 226
- US-A- 6 057 321
- DATABASE CHEMABS [Online] CHEMICAL ABSTRACTS SERVICE, COLUMBUS, OHIO, US; FUJII, HIROYUKI ET AL: "Ink-jet recording sheet showing good resistance towards variation of outside conditions" XP002292544 retrieved from STN Database accession no. 2003:110691 -& JP 2003 039813 A (ASAHI GLASS CO., LTD., JAPAN) 13 February 2003 (2003-02-13)

## Description

The present invention relates to a novel polymerisate, which is useful for stabilising a composition of matter susceptible to degradation induced by light, heat or oxidation or as a dispersant in a pigment dispersion, a composition comprising the novel polymerisate, a process for preparing the composition, a pigment dispersion containing dispersible inorganic or organic pigment particles and the novel polymerisate, a process for preparing the novel polymerisate by applying the method of controlled or "living" polymerisation and to the use of the pigment dispersion for preparing coatings, images, lacquers and others.

Dispersions containing pigments and polymer additives are used in an almost unlimited number of different technical applications, e.g. as coating materials, for printing inks, colouring plastic materials, including fibres, glasses, or ceramic products, for formulations in cosmetics, or for the preparation of paint systems, in particular automotive, industrial and decorative paints.

The function of polymers in pigment dispersions is manifold. They may act as solubilisers in the given carrier liquid, e.g. water or organic solvents. Suitable polymers are also needed as stabilisers to prevent precipitation or flocculation. Polymers may also improve the gloss of the pigment dispersion or enhance its rheology. Depending on the type and polarity of the dispersing agent, e.g. water, organic solvents or mixtures thereof, or polymers of variable structure are chosen. In view of ecological requirements, the use of aqueous pigment dispersions is particularly preferred, as well as dispersions based on organic solvents with high solids content. In aqueous systems, mixtures of hydrophobic and hydrophilic polymers or block copolymers, so-called A-B block copolymers, containing hydrophilic and hydrophobic polymer blocks can be used. The hydrophobic "A" blocks (homo- or copolymers of (meth)-acrylate monomers) associate with either pigment or emulsion polymer surfaces or both. With hydrophilic "B" blocks (neutralised acid or amine containing polymers), these copolymers are useful for preparing water based pigment dispersions, cf. H. J. Spinelli, Progress in Organic Coatings 27 (1996), 255-260*.*

Many different well-established methods are available for preparing the polymers used in pigment dispersions. Most methods have the disadvantage that uncontrollable recombination reactions of initiator radicals may occur immediately after their formation with the effect that variable ratios between initiator radicals and stable free radicals are produced. Consequently, in some cases there is an inefficient control of the polymerisation process.

Group transfer polymerisation (GTP) is a well-established method for producing A-B block copolymers of defined structure from methacrylate monomers. Despite its wide applicability and usefulness the GTP method still has several drawbacks. The polymerisation initiators used in this method, such as the silyl ketene acetals disclosed in U.S. 4,656,226*,* e.g. 1-trimethyl-silyloxy-1-isobutoxy-2-methylpropene, are highly reactive and difficult to prepare in a multi-step synthesis. This necessitates the use of carefully dried and purified reactants, which limits this method in industrial applications operating on a large scale.

In view of the almost unlimited range of different technical applications, there remains a growing need for pigment dispersions of improved pigment affinity and rheology, as expressed by the viscosity of the mill base at a given shear rate and improved gloss of surface coatings.

*WO 96*/*30421* discloses a controlled or "living" polymerisation process of ethylenically unsaturated polymers, such as styrene or (meth) acrylates, by employing the Atom Transfer Radical Polymerisation (ATRP) method. This method produces defined oligomeric homopolymers and copolymers, including block copolymers. Initiators are employed which generate radical atoms, such as •Cl, in the presence of a redox system of transition metals of different oxidation states, e.g. Cu(I) and Cu(II), providing "living" or controlled radical polymerisation.

*WO 00*/*40630* discloses pigment dispersions containing block copolymers as dispersants prepared by the ATRP method. The block copolymers consist of defined hydrophobic and hydrophilic polymer blocks. The difference in polarity is obtained by copolymerising polymer blocks A and B wherein different amounts of monomer units with hydrophilic functional groups are present, such as amino or alkylated amino groups. This changes the hydrophilic/ hydrophobic character of the block copolymer dispersant. In one embodiment, the individual hydrophobic "A" blocks based on uncharged homo- or copolymers of methacrylate or acrylate monomers form steric stabiliser blocks in solvent based coating formulations. The presence of more hydrophilic "B" blocks (e.g. amino functional acrylates or methacrylates) is the basis for pigment affinity to certain organic or inorganic pigments. Various additives, such as p-toluenesulphonic acid, are also disclosed.

*WO 01*/*51534* discloses comb polymer dispersants prepared via macro-monomers made by ATRP.

It is self-explanatory fact in nature that pigments, dyes and other colorants are decomposed by the action of light and atmospheric oxygen. Therefore, it is desirable to protect the polymer dispersants and the pigments present in pigment compositions, particularly coatings, against the action of light by reducing the intensity of ultraviolet radiation in pigment composition exposed to visible light.

Light protecting agents, such as UV-absorbers are substances, which absorb radiant energy in the-wavelength of UV-radiation. Suitable UV-absorbers are 2-(2'-hydroxyphenyl)-benzotriazoles, 2-hydroxybenzophenones, or 2-(2-hydroxyphenyl)-1,3,5-triazines. When used as additives in pigment dispersion, they filter off the UV-components of the electromagnetic irradiation, decrease light sensitivity, resulting discoloration and degradation of the dispersion. However, their efficiency as light protecting agents in pigment dispersions, particularly in lower concentrations, remains unsatisfactory. Raising the concentration to more effective levels is unrealistic and disadvantageous. A serious problem then is the lower stability of dispersions resulting from the flocculation of the pigment particles and higher additive concentrations.

It is believed that the action of light and atmospheric oxygen initiates the decomposition of pigments by a photo-oxidative or photo-reductive process at the surface of pigment crystals. Therefore, stabilisers are desirable which specifically protect the surface of pigment crystals.

It has surprisingly been found out that the efficiency of UV-absorbers and other light protecting agents in pigment dispersions is increased in the event that UV-absorber molecules are directly linked to the structure of polymer dispersants obtained by the method of controlled or "living" polymerisation. The direct link is established by chemical bonds, such as ether or ester bonds, and the active structural moiety of UV-absorber molecules and other light protecting agents.

The present invention relates to a polymerisate of the formula: 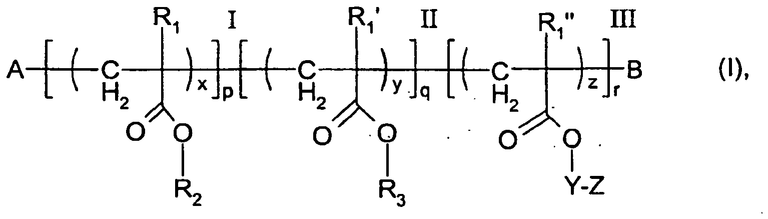 Wherein
A and B represent polymer chain terminal groups;
R₁, R₁' and R," independently of one another represent hydrogen or C₁-C₄alkyl;
R₂ represents hydrogen or an ester group of higher polarity;
R₃ represents an ester group of lower polarity;
Y represents the direct bond or a bivalent group;
or Y represents a substituent that contains a functional group, which forms a salt with a salt forming group present in the group Z by acid-base reaction, acid addition or quaternisation reaction;
Z represents the functionally effective group of the formula D or E 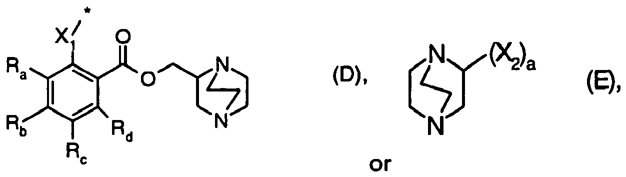 wherein Rₐ, R_{b}, R_{c} and R_{d} independently of one another represent hydrogen, halogen, C₁-C₄alkyl or C₁-C₄alkoxy,
X1 is a salt forming group selected from carboxy, sulpho or phosphono; and
X2 represents a bivalent functional group selected from -C(=O)-O-, - C(=O)-NH-, -CH₂-O-, -O-, -NH- or -N(C₁-C₄alkyl)-, which is attached to Y;
the index a represents one or zero (= direct bond),

The numerals I, II, III represent individual polymer blocks in any sequential order;

The indices p, q and r represent the number of polymer blocks I, II and III in the polymerisate, wherein one of the indices p and q independently of one another represents zero, one or a numeral greater than one and the other one represents one or a numeral greater than one; and r represents one or a numeral greater than one; and wherein The indices x, y and z define the number of monomer units present in the individual polymer blocks I, II and III.

A specific embodiment of the invention relates to a macro-monomer of the formula: 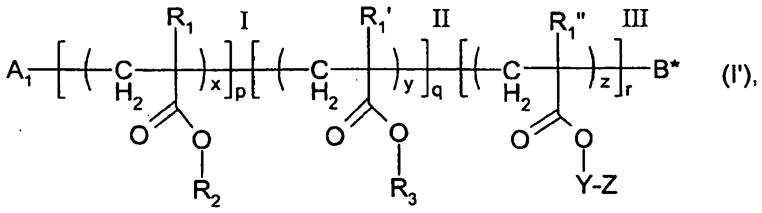 Wherein
A, represents the fragment of a polymerisation initiator;
B* represents a polymerisable, ethylenically unsaturated terminal group; and
R₁, R₁', R₁", R₂, R₃, Y, Z, the numerals I, II and III and the indices p, q, r, x, y and z are as defined above.

Furthermore, a specific embodiment relates to a comb polymer of the formula: 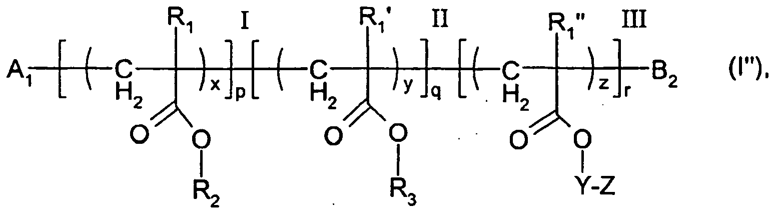 Wherein
A₁ represents the fragment of a polymerisation initiator;
R₁, R₁', R₁", R₂, R₃, Y, Z, the numerals I, II and III and the indices p, q, r, x, y and z are as defined above; and
B₂ represents a polymer group of the partial formula: 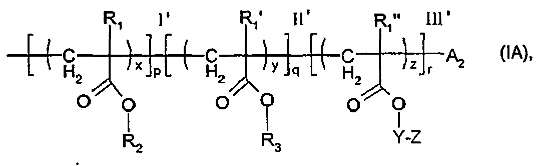 Wherein
A₂ represents a polymer chain terminal group;
R₁, R₁', R₁", R₂, R₃, Y and Z are as defined above;
The numerals I', II" and III' represent individual polymer blocks in any sequential order;
The indices p, q and r represent the number of polymer blocks I, II and III in the polymerisate, wherein
One of the indices p, q and r independently of one another represents one or a numeral greater than one;
And the other ones represent zero, one or a numeral greater than one; and
The indices x, y and z define the number of monomer units present in the individual polymer blocks I, II and III.

The terms and definitions used in the specification of the present invention preferably have the following meanings:

The term polymerisate comprises any polymer structure composed of the individual block copolymers I, II and III in any sequential order. Each block copolymer essentially consists of random block, multi block, star or gradient copolymers. The polymer blocks I, II and III consist of at least two repeating units of ethylenically unsaturated, polymerisable monomer units: 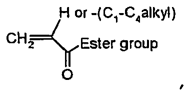 which are polymerisable in the known methods, such as conventional or controlled or "living" polymerisation. Controlled or "living" polymerisation is defined as a process wherein the polymerisation is initiated from an initiating fragment which adds monomers by radical poly-addition reactions under conditions which suppress undesirable side reactions, such as radical transfer to solvent, bimolecular termination or so-called disproportionation. The suppression of these side reactions is effected to such a degree that enables the formation of a block copolymer by subsequent addition of different monomers or the functionalisation of a terminal group to form a macro-monomer. The method of living polymerisation is described in U.S. Patent Specification No. 4,581,429.

At least three different types of polymerisates (I) are present in the compositions defined above, wherein.
1) One group of the partial formula: 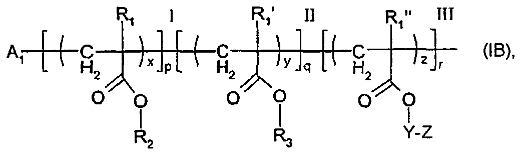 Wherein A, represents the fragment of a polymerisation initiator, is attached to one polymer chain terminal group B₁: 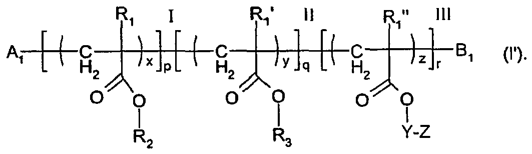 In this case there is one radically transferable group B₁, such as chlorine or bromine, per initiator fragment A₁. Block copolymers wherein the transferable group B, has been replaced with a polymerisable chain terminal group B*, are known as macro-monomers;
2) More than one of the groups 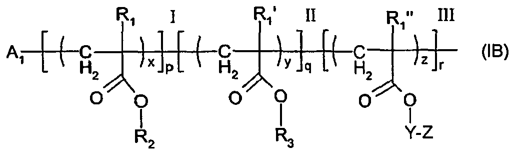 is attached to one polymer chain terminal group B. Copolymers of this type are known as comb polymers or graft copolymers. Further polymerising or copolymerising the polymerisable chain terminal group B, by any known method of polymerisation produces macro-monomers of the following structure: 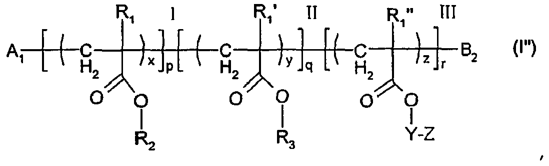 Wherein B, represents a polymer group of the partial formula: 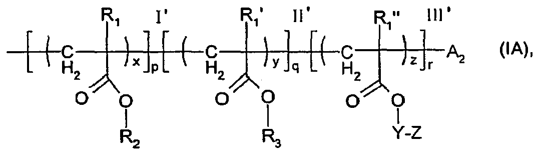 Wherein A₂ represents the fragment of a polymerisation initiator;
3) More than one of the groups 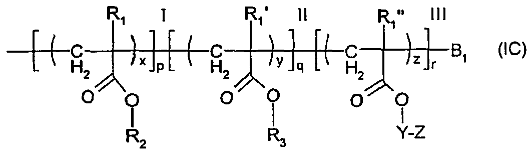 is attached to one initiator fragment A. In this case up to six, preferably up to four, transferable groups are attached to the initiator fragment A₁. This type of copolymer comprises so-called star type or branched copolymers.

In a polymerisate (I), the numerals I, II and III represent individual polymer blocks in any sequential order.

The indices p, q and r represent the number of polymer blocks I, II and III in the polymerisate (I). One of p and q independently of one another represents zero, one or a numeral greater than one (p or q: ≥ 0) and the other one represents one or a numeral greater than one (p or q: ≥ 1). The index r represents a numeral greater than one (r: ≥ 1)

According to a preferred embodiment the polymer blocks II and III are present in the polymerisate (I). In that event p represents zero and q represents one or a numeral greater than one (p: 0, q: ≥ 1).

The index numbers x, y and z independently of one another define the number of monomer units present in the polymer blocks I, II and III. In the event that one of p and q represents zero, x or y is also zero. In the event that one of p and q represents one, the lowest value of x or y is at least one. A range from two to 1 000 is preferred for the sum of x, y and z. The preferred molecular weight range is of the polymer blocks I, II and III is from about 1 000 to 100 000, preferably about 1 000 to 50 000. A particularly preferred molecular weight range is from about 1 000 to 15 000.

In copolymers (I) the group A or B represents the polymerisation initiator fragment of a polymerisation initiator of the formula:

A-B,

Wherein one of A and B represents the fragment of a polymerisation initiator capable of initiating the polymerisation of ethylenically unsaturated monomers by atom transfer radical polymerisation (ATRP) in the presence of a catalyst capable of activating controlled radical polymerisation by ATRP and the other one represents a radically transferable atom or group. A suitable polymerisation inhibitor is capable of initiating atom transfer radical polymerisation of the fragments A or B. The polymerisation subsequently proceeds by a reaction mechanism known under the term ATRP or related methods. A suitable polymerisation initiator, which contains the radically transferable atom or group •B (or •A), is described in *WO 96*/*30421* and *WO 98*/*01480.* A preferred radically transferable atom or group •B is •Cl or •Br, which is cleaved as a radical from the initiator molecule and which may be subsequently replaced after polymerisation as a leaving group with a polymerisable chain terminal group. Representative initiator molecules are compounds of the formula: 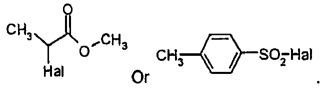 Wherein Hal represents chlorine or bromine.

In a polymerisate (I') the group A, represents the fragment of a polymerisation initiator and B, represents a polymerisable, ethylenically unsaturated terminal group. A polymerisate (I') is available by applying the ATRP method in the presence of an initiator molecule of the formula A-B and substituting the chain terminal group with a polymerisable, ethylenically unsaturated group.

In a polymerisate (I"), A, represents the fragment of a polymerisation initiator and B, represents a polymer group of the partial formula:

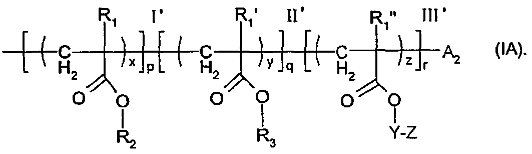

A polymerisate (I") is available by applying the ATRP method and in the presence of a "star-shaped" or "bird type" initiator molecules of the formulae:

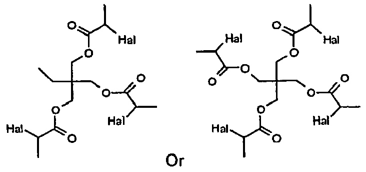

In the formulae above Hal represents chlorine or bromine. These initiator molecules are prepared by the reaction of a reactive functional derivative of α-halogen carboxylic acid of the formula: 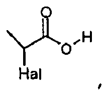 e.g. the acid chloride or bromide of this compound, with an alcohol of the formula HO-R₂, wherein R, together with the HO-group represents a branched trihydroxy alcohol, e.g. 1,1,1-(tris-hydroxymethyl)-propane, or represents a branched tetrahydroxy alcohol, e.g. pentaerythritol.

A preferred polymerisation initiator, which generates linear polymers, block copolymers or macro monomers, is selected from the group consisting of C₁-C₅alkyl halides, C₆-C₁₅aralkyl-halides, C₇-C₈haloalkyl esters, arene sulphonyl chlorides, α-haloalkane nitriles, α-haloacrylates and halolactones.

Specific initiators are selected from the group consisting of α,α'-dichloro- or α,α'-dibro-moxylene, p-toluenesulphonylchloride (PTS), hexakis-(α-chloro- or α-bromomethyl)-benzene, 1-phenethyl chloride or bromide, methyl or ethyl 2-chloro- or 2-bromopropionate, methyl or ethyl-2-bromo- or 2-chloroisobutyrate, and the corresponding 2-chloro- or 2-bromopropionic acid, 2-chloro- or 2-bromoisobutyric acid, chloro- or bromoacetonitrile, 2-chloro- or 2-bromopropionitrile, α-bromobenzacetonitrile, α-bromo-γ-butyrolactone (= 2-bromo-dihydro-2(3H)-furanone) and the initiators derived from 1,1,1-(tris-hydroxymethyl)-propane and pentaerythritol of the formulae of above.

According to an alternative embodiment, A and B in the polymerisate (I) represent chain terminal groups from fragments of a polymerisation initiator containing the groups 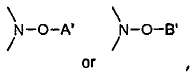 Wherein A' or B' is cleavable from the initiator as a free radical A• or B• and is capable of initiating the polymerisation of ethylenically unsaturated monomers. The method of polymerisation that applies is the so-called controlled polymerisation with >N-O-R compounds. According to another alternative embodiment, one of A and B represents the fragment of a free radical initiator and the other one represents the chain terminal group from the free nitroxyl radical

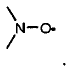

The method of polymerisation that applies is the so-called controlled polymerisation with >N-O• compounds. A suitable polymerisation initiator containing the chain terminal group (A) is represented by the formula: 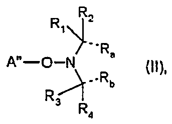 Wherein
- A": is cleavable from the compound (II) as a free radical A• and is capable of initiating the polymerisation of ethylenically unsaturated monomers;
- One of R₁ and R: , represents C₁-C₇alkyl or hydroxy-C₁-C₇alkyl and the other one represents C₁-C₁alkyl, C₁-C₁alkyl substituted by C,-C,alkoxycarbonyl or C₁-C₄alkoxy or hydroxy-C₁-C₄alkyl; or
- R,: and R, together with the adjacent C-atom both represent C₃-C₇cycloalkyl;
- R,: and R, independently of one another are as defined as R, and R, or represent hydrogen;
- R,: represents hydrogen or a substituent selected from the group consisting of C₁-C₄alkyl, hydroxy-C₁-C₄alkyl, C₅-C₁₀aryl, C₅-C₁₀aryl-C₁-C₄alkyl, C₁-C₄alkyl-C₅-C₁₀aryl, cyano, C₁-C₄alkoxycarbonyl, C₁-C₄alkanoyloxy, C₁-C₄alkanoyloxy-C₁-C₄alkyl, carbamoyl, mono-or di- C₁-C₄alkylcarbamoyl, mono- or di-2-hydroxyethylcarbamoyl, amidino, 2-imidazolyl, 1-hydroxy-2-hydroxymethyl-2-propylcarbamoyl, 1,1-dihydroxymethyl-2-hydroxycarbamoyl and -P=O(O-C₁-C₄alkyl); and
- R_{b}: is as defined as R; or
- Rₐ: and R_{b} together represent a divalent group and form a 5-, 6-, 7- or 8-membered aliphatic or aromatic heterocyclic group, which may contain 1-3 additional heteroatoms selected from the group consisting of nitrogen, oxygen and sulphur.

The free radical species cleaved from a compound (II) is illustrated by the formula:

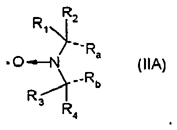

The group A", which is cleavable from the compound (II) as the free radical A•, has at least one C-atom and is capable of initiating the polymerisation of ethylenically unsaturated monomers (>N-O-R polymerisation). In the alternative the group A" represents the fragment of a free radical initiator (>N-O• polymerisation).

A", defined as the group which is cleavable from the compound (II) as the free radical A• (>N-O-R polymerisation) is preferably selected from the group of aliphatic and cycloaliphatic substituents consisting of aryl-CH₂-, (CH₃)CH(-aryl)-, aryl-CH₂-CH₂-, (CH₃)₂C(-aryl)-, (C₃-C₆cycloalkyl)₂C(-CN)-, (C₁-C₁₂alkyl)₂C(-CN)-, CH=CH₂CH₂-, C₁-C₁₂alkyl-C(-R)[-C(=O)-C₁-C₁₂alkyl]-, C₁-C₁₂alkyl-C(-R)[-C(=O)-C₆-C₁₂aryl]-, C₁-C₁₂alkyl-C(-R)[-C(=O)-C₁-C₁₂alkoxy]-, C,-C₁₂alkyl-C(-R)[-C(=O)-phenoxy]-, C₁-C₁₂alkyl-C(-R)[-C(=O)-N-di-C₁-C₁₂alkyl]-, C₁-C₁₂alkyl-C(-R)[-(C=O)-NH-C₁-C₁₂alkyl]-, C₁-C₁₂alkyl-C(-R)[-C(=O)-NH₂]₋, CH₃CH=CH-CH₂-, CH₂=C(CH₃)CH₂-, phenyl-CH=CH-CH₂-, 2-propynyl, 2-tetrahydropyranyl or 2-tetrahydrofuryl, wherein R represents hydrogen or C₁-C₁₂alkyl.

The aryl groups in these groups defined for A" may additionally be substituted with a substituent selected from the group consisting of C₁-C₁₂alkyl, halogen, C₁-C₁₂alkoxy, C₁-C₁₇alkylcarbonyl, glycidyloxy, OH, -COOH and -COOC₁-C₁₂alkyl.

A" is preferably selected from the group of aliphatic and cycloaliphatic substituents consisting of phenyl-CH₂-, CH₃CH(-phenyl)-, (CH₃)₂C(-phenyl)-, (C₅-C₆cycloalkyl)₂C(-CN)-, (CH,),C(-CN)-, -CH₂=CH-CH₂-, CH₃CH(-CH=CH₂)-, C₁-C₈alkyl-C(-R)[-C(=O)-phenyl]-, C,-C₈alkyl-C(-R)[-C(=O)-C₁-C₈alkoxy]-, C₁-C₈alkyl-C(-R)[-C(=O)-C₁-C₈alkyl]-, C₁-C₈alkyl-C(-R)[-C(=O)-N-di-C₁-C₈alkyl]-, C₁-C₈alkyl-C(-R)[-C(=O)-NH-C₁-C₈alkyl]- and C₁-C₈alkyl-C(-R)[-C(=O)-NH₂]-, wherein R is hydrogen or C₁-C₈alkyl.

A particularly preferred group of substituents A" is selected from the group of aliphatic and cycloaliphatic substituents consisting of phenyl-CH₂-, CH₃CH(-phenyl)-, (CH₃)₂C(-phenyl)-, (C₅-C₄cycloalkyl)₂C(-CN)-, (CH₃)₂C(-CN)-, -CH₂=CH-CH₂-, CH₃CH(-CH=CH₂)-, C₁-C₄alkyl-C(-R)[-C(=O)-phenyl-, C₁-C₄alkyl-C(-R)[-C(=O)C₁-C₄alkoxy-, C₁-C₄alkyl-C(-R)[-C(=O)-C₁-C,alkyl-, C₁-C₄alkyl-C(-R)[-C(=O)-N-di-C₁-C₄alkyl-, C₁-C₄alkyl-C(-R)[-C(=O)-NH-C₁-C₄alkyl-and C₁-C₄alkyl-C(-R)[-C(=O)-NH₂-, wherein R is hydrogen or C₁-C₄alkyl.

A compound wherein the free nitroxyl radical is present is represented by the formula IIA. The free nitroxyl radical is generated from a compound (II), wherein A" is the fragment of a free radical initiator.

A" defined as the fragment of a free radical initiator (>N-O• polymerisation) is a fragment from known free radical initiators used as sources of free radicals in so-called living polymerisation reactions, e.g. a suitable bis azo compound, a peroxide or a hydroperoxide. Suitable bis azo compounds are commercially available, e.g. 2,2'-azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 1,1'-azobis(1-cyclohexanecarbonitrile), 2,2'-azobis(isobutyramide) dihydrate, 2-phenylazo-2,4-dimethyl-4-methoxyvaleronitrile, dimethyl 2,2'-azobisisobutyrate, 2-(carbamoylazo)isobutyronitrile, 2,2'-azobis(2,4,4-trimethylpentane), 2,2'-azobis(2-methylpropane), 2,2'-azobis(N,N'-dimethyleneisobutyramidine) as free base or hydrochloride, 2,2'-azobis(2-amidinopropane) as free base or hydrochloride, 2,2'-azobis{2-methyl-N-[1,1-bis(hydroxymethyl)ethyl]propionamide} or 2,2'-azobis{2-methyl-N-[1,1-bis(hydroxymethyl)-2-hydroxyethyl]propionamide}.

Suitable peroxides and hydroperoxides are commercially available, e.g. acetylcyclohexane-sulphonyl peroxide, diisopropyl peroxydicarbonate, tert-amyl perneodecanoate, tert-butylp-erneodecanoate, tert-butylperpivalate, tert-amylperpivalate, bis(2,4-dichlorobenzoyl) peroxide, diisononanoyl peroxide, didecanoyl peroxide, dioctanoyl peroxide, dilauroyl peroxide, bis(2-methylbenzoyl) peroxide, disuccinoyl peroxide, diacetyl peroxide, dibenzoyl peroxide, tert-butyl per-2-ethylhexanoate, bis(4-chlorobenzoyl) peroxide, tert-butyl perisobutyrate, tert-butyl permaleate, 1,1 -bis(tert-butylperoxy)-3,5,5-trimethylcyclohexane, 1,1 -bis(tert-bu-tylperoxy)cyclohexane, tert-butyl peroxyisopropyl carbonate, tert-butyl perisononaoate, 2,5-dimethylhexane 2,5-dibenzoate, tert-butyl peracetate, tert-amyl perbenzoate, tert-butyl perbenzoate, 2,2-bis(tert-butylperoxy)butane, 2,2-bis (tert-butylperoxy)propane, dicumyl peroxide, 2,5-dimethylhexane 2,5-di-tert-butylperoxid, 3-tert-butylperoxy-3-phenyl phthalide, di-tert-amyl peroxide, α,α'-bis(tert-butylperoxyisopropyl) benzene, 3,5-bis(tert-butylperoxy)-3,5-dimethyl-1 ,2-dioxolane, di-tert-butyl peroxide, 2,5-dimethylhexyne 2,5-di-tert-butyl peroxide, 3,3,6,6,9,9-hexamethyl-1,2,4,5-tetraoxacyclononane, p-menthane hydroperoxide, pinane hydroperoxide, diisopropylbenzene mono-α-hydroperoxide, cumene hydroperoxide or tert-butyl hydroperoxide.

In a compound (II) the substituents R₁, R₂ and Rₐ and R₃ R₄ and R_{b} together with the adjacent C-atom on the nitrogen atom preferably represent groups of the partial formulae:

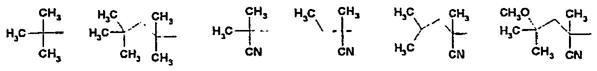

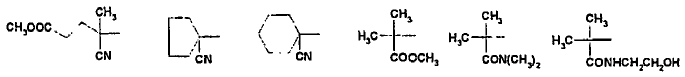

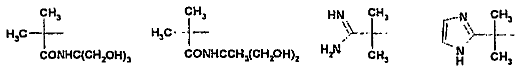

In a preferred embodiment one of R, and R, represents methyl and the other one represents methyl or ethyl and one of R₃ and R₄ represents methyl and the other one represents methyl or ethyl and Rₐ and R_{b} together represent a group of the partial formula: 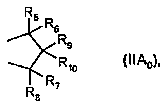 Wherein R₅, R₆, R, and R₈ independently of one another represent hydrogen, methyl or ethyl; and one of R₉ and R₁₀ independently of the other represents hydrogen or substituents or R, and R₁₀ both represent substituents.

In a preferred embodiment of the invention the chain terminal group from fragments of a polymerisation initiator containing the terminal groups (A) or (B), e.g. the free nitroxyl radical, represents a group of the partial formula: 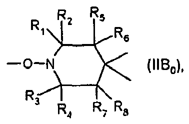 Wherein R, - R₁₄ are as defined above and the 4-position is substituted by one or two substituents. Preferred groups B₀ which contain substituents in 4-position are represented by the partial formulae: 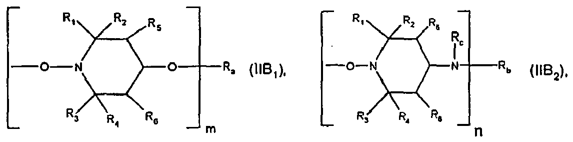 and 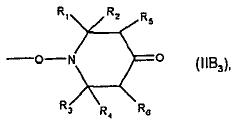 Wherein
- R₁ R₆: are as defined above;
- m: represents a numeral from one to four;
- n: represents one, two or three;
- If m: represents one,
- Rₐ: represents hydrogen, C₁-C₁₀alkyl which is uninterrupted or interrupted by one or more oxygen atoms, 2-cyanoethyl, benzoyl, glycidyl, or represents a monovalent radical of an aliphatic carboxylic acid having 2 to 18 C-atoms, of a cycloaliphatic carboxylic acid having 7 to 15 C-atoms, of an a,b-unsaturated carboxylic acid having 3 to 5 C-atoms or of an aromatic carboxylic acid having 7 to 15 C-atoms, where each carboxylic acid can be substituted in the aliphatic, cycloaliphatic or aromatic moiety by 1 to 3 -COOZ groups, in which Z represents H, C₁-C₂₀alkyl, C₃-C₁₂alkenyl, C₃-C₇cycloalkyl, phenyl or benzyl; or
- Rₐ: represents a monovalent radical of a carbamic acid or phosphorus-containing acid or a monovalent silyl radical; or If m represents 2,
- Rₐ: represents C₂-C₁₇alkylene, C₄-C₁₂alkenylene, xylylene, or represents a divalent radical of an aliphatic dicarboxylic acid having 2 to 36 C-atoms, of a cycloaliphatic or aromatic dicarboxylic acid having 8 to 14 C-atoms or of an aliphatic, cycloaliphatic or aromatic dicar-bamic acid having 8 to 14 C-atoms, where each dicarboxylic acid may be substituted in the aliphatic, cycloaliphatic or aromatic moiety by one or two -COOZ groups; or Rₐ is a divalent radical of a phosphorus-containing acid or a divalent silyl radical; or
- If m: represents 3,
- R,: represents a trivalent radical of an aliphatic, cycloaliphatic or aromatic tricarboxylic acid, which may be substituted in the aliphatic, cycloaliphatic or aromatic moiety by -COOZ, of an aromatic tricarbamic acid or of a phosphorus-containing acid, or is a trivalent silyl radical; or
- If m: represents 4,
- Rₐ: represents a tetravalent radical of an aliphatic, cycloaliphatic or aromatic tetracarboxylic acid;
- If n: represents one,
- R_{b}: represents C₁-C₁₂alkyl, C₃-C₇cycloalkyl, C₇-C₈aralkyl, C₂-C₁₈alkanoyl, C₃-C₅alkenoyl or benzoyl;
- R_{c}: represents C₁-C₁₈alkyl, C₅-C₇cycloalkyl, C₂-C₈alkenyl unsubstituted or substituted by a cyano, carbonyl or carbamide group, glycidyl or represents a group of the formulae -CH₂CH(OH)-Z, -CO-Z- or -CONH-Z, wherein Z represents hydrogen, methyl or phenyl, or R_{b} and R_{c} together represent the cyclic acyl radical of an aliphatic or aromatic 1,2- or 1,3-dicarboxylic acid;
- If: n represents two,
- R_{b}: is as defined above; and
- R_{c}: represents C₂-C₁₂alkylene, C₆-C₁₂arylene, xylylene, a -CH₂CH(OH)CH₂-O-B-O-CH₂CH(OH)CH₂- group, wherein B represents C₇-C₁₀alkylene, C₆-C₁₃-arylene or C₆-C₁₂cycloalkylene; or, provided that R_{b} is not alkanoyl, alkenoyl or benzoyl, R_{c} represents a divalent acyl radical of an aliphatic, cycloaliphatic or aromatic dicarboxylic acid or dicar-bamic acid, or represents the group -CO-; or
- R_{d}: represents a group of the partial formula: 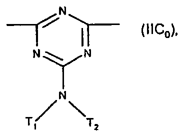
Wherein
- T₁ and T₂: independently of the other represent hydrogen, C₁-C₁₈alkyl, or T, and T, together represent C₄-C₆alkylene or 3-oxapentamethylene; or
- If n: represents 3,
- R_{c}: represents 2,4,6-triazinyl.

A highly preferred group B₀ which contains substituents in 4-position is selected from the group consisting of the partial formulae B, and B₂, wherein
- m: represents 1;
- Rₐ: represents hydrogen, C₁-C₁₈alkyl which is uninterrupted or interrupted by one or more oxygen atoms, 2-cyanoethyl, benzoyl, glycidyl, or represents a monovalent radical of an aliphatic carboxylic acid having 2 to 12 C-atoms, of a cycloaliphatic carboxylic acid having 7 to 15 C-atoms, of an a,b-unsaturated carboxylic acid having 3 to 5 C-atoms or of an aromatic carboxylic acid having 7 to 15 C-atoms;
- m: represents 2;
- Rₐ: represents a divalent radical of an aliphatic dicarboxylic acid having 2 to 36 C-atoms;
- n: represents 1;
- R_{b}: represents C₁-C₁₂alkyl, C₃-C₇cycloalkyl, C₇-C₈aralkyl, C₂-C₁₈alkanoyl, C₃-C₈alkenoyl or benzoyl; and
- R,: represents C₁-C₁₈alkyl, C₃-C₇cycloalkyl, C₇-C₈alkenyl unsubstituted or substituted by a cyano, carbonyl or carbamide group, glycidyl, or represents a group of the partial formulae -CH₂CH(OH)-Z, -CO-Z or -CONH-Z, wherein Z represents hydrogen, methyl or phenyl. Another highly preferred group Bₒ which contains substituents in 4-position is selected from the group consisting of the partial formulae B, and B₂, wherein
- m: represents 1;
- Rₐ: represents hydrogen, C₁-C₁₈alkyl, 2-cyanoethyl, benzoyl, glycidyl, or a monovalent radical of an aliphatic carboxylic acid having 2 to 12 C-atoms;
- m: represents 2;
- Rₐ: represents a divalent radical of an aliphatic dicarboxylic acid having 2 to 36 C-atoms;
- n: represents 1;
- R_{b}: represents C₁-C₁₇alkyl, C₇-C₈aralkyl, C₂-C₁₈alkanoyl, C₃-C₅alkenoyl or benzoyl; and
- R_{c}: represents C₁-C₁₈alkyl, glycidyl, a group of the formulae -CH₂CH(OH)-Z or -CO-Z, wherein Z represents hydrogen, methyl or phenyl.

Another particularly preferred embodiment relates to the group B₀, wherein one of R, and R₁₀ represents hydrogen and the other one C₁-C₄alkanoylamino.

In a polymerisate (I) R₁, R₁' and R₁" independently of one another represent hydrogen or C₁-C₄alkyl. According to a preferred embodiment R₁, R₁' and R," independently of one another represent hydrogen or methyl. According to a particularly preferred embodiment R₁, R,' and R," have the same meanings and represent hydrogen or methyl. In the event that R₁, R,' and R," each represent hydrogen, the polymerisate (I) is composed of the acrylate polymer blocks I, II, or III. In the event that R₁, R₁' and R₁" each represent methyl, the polymerisate (I) is composed of the methacrylate polymer blocks I, II, or III.

In the polymer group I the ester group R₂ of higher polarity is, for example, an unsaturated or saturated or an aromatic hydrocarbon group substituted by hydrophilic substituents, e.g. 1-6 hydroxy groups, or 1-2 basic, e.g. 1-2 amino, or 1-2 acidic groups, e.g. carboxy, sulpho or phosphono, or 1 amino and 1 carboxy groups.

In a preferred embodiment the polymer block I, wherein R₂ represents an ester group of higher polarity, is composed of acrylate or methacrylate repeating units. Representative monomers are selected from the group consisting of acrylic acid and C₁-C₄alkylacrylic acid, particularly acrylic and methacrylic acid.

In the polymer block I R₂ represents an ester group of higher polarity, e.g. an ester group selected from the group consisting of mono- or dihydroxy-C₂-C₄-alkyl, e.g. 2-hydroxyethyl, 2,3-dihydroxypropyl or 4-hydroxyl-n-butyl, trihydroxy-C₃-C₅alkyl, amino-C₂-C₁₈alkyl, e.g. 2-aminoethyl or 3-amino-n-propyl, ammonio-C₂-C₁₈alkyl, e.g. 2-ammonioethyl or 3-ammonio-n-propyl, C₁-C₄alkylamino-C₂-C₁₈alkyl, e.g. 2-N-methylaminoethyl or 3-N-methylamino-n-propyl, di-C₁-C₄alkylamino-C₂-C₁₈alkyl, e.g. 2-N,N-dimethylaminoethyl or 3-N,N-dimethyl-amino-n-propyl, tri-C₁-C₄alkylammonio-C₂-C₁₈alkyl, e.g. 2-trimethylammonioethyl or 3-trimethylammonio-n-propyl, hydroxy-C₂-C₄alkylamino-C₂-C₁₈alkyl, e.g. 2-N-2-hydroxyethyl-aminoethyl, C₁-C₄alkyl-(hydroxy-C₂-C₄alkyl)amino-C₂-C₁₄alkyl, e.g. 2-[N-(2-hydroxyethyl)-N-methylamino]-ethyl, di-C₁-C₄alkyl-(hydroxy-C₂-C₄alkyl)ammonio-C₂-C₁₈alkyl, e.g. 2-[N,N-dimethyl-N-(2-hydroxyethyl)-ammonio]-ethyl, and C₁-C₄alkyl substituted by carboxy, sulpho or phosphono, e.g. 2-carboxyethyl or 2-sulphoethyl.

In a particularly preferred embodiment the polymer block I, wherein R, represents an ester group of higher polarity, is composed of acrylate or methacrylate repeating units. The ester group is C₂-C₄alkyl substituted by amino, ammonio, C₁-C₄alkylamino, e.g. methyl- or ethylamino, di-C₁-C₄alkylamino, e.g. dimethyl-or diethylamino, tri-C₁-C₄alkylammonio, e.g. trimethyl- or triethylammonio, or di-C₁-C₄alkyl-2-hydroxyethylammonio, e.g. dimethyl-2-hy-droxyethylammonio.

Representative monomers are (meth)acrylates esterified by aminoalkyl groups selected from the group consisting of 2-dimethylaminoethyl acrylate (DMAEA), 2-dimethylaminoethyl methacrylate (DMAEMA), 2-diethylaminoethyl acrylate (DEAEA), 2-diethylaminoethyl methacrylate (DEAEMA), 2-t-butylaminoethyl acrylate (t-BAEA) and 2-t-butylaminoethyl methacrylate (t-BAEMA).

A suitable unsaturated or saturated or an aromatic hydrocarbon group substituted by hydrophilic substituents is selected from the group consisting of mono- or dihydroxy-C₂-C₄-alkyl, e.g. 2-hydroxyethyl or 2,3-dihydroxypropyl, trihydroxy-C₃-C₅alkyl, amino-C₂-C₁₈alkyl, e.g. 2-aminoethyl or 3-amino-n-propyl, ammonio-C₂-C₁₈alkyl, e.g. 2-ammonioethyl or 3-ammonio-n-propyl, C₁-C₄alkylamino-C₂-C₁₈alkyl, e.g. 2-N-methylaminoethyl or 3-N-methylamino-n-propyl, di-C₁-C₄alkylamino-C₂-C₁₈alkyl, e.g. 2-N,N-dimethylaminoethyl or 3-N,N-dimethyl-amino-n-propyl, tri-C₁-C₄alkylammonio-C₂-C₁₈alkyl, e.g. 2-trimethylammonioethyl or 3-trimethylammonio-n-propyl, hydroxy-C₂-C₄alkylamino-C₂-C₁₈alkyl, e.g. 2-N-2-hydroxyethyl-aminoethyl, C₁-C₄alkyl-(hydroxy-C₂-C₄alkyl)amino-C₂-C₁₈alkyl, e.g. 2-[N-(2-hydroxyethyl)-N-methylamino]-ethyl, di-C₁-C₄alkyl-(hydroxy-C₂-C₄alkyl)ammonio-C₂-C₁₈alkyl, e.g. 2-[N,N-dimethyl-N-(2-hydroxyethyl)-ammonio]-ethyl and C₁-C₄alkyl substituted by carboxy, sulpho or phosphono, e.g. 2-carboxyethyl or 2-sulphoethyl.

In the polymer block II the ester group R₃ of lower polarity is a saturated or aromatic hydrocarbon group selected from the group consisting of C₁-C₂₄alkyl, e.g. methyl, ethyl, isopropyl, n-butyl or 2-ethylhexyl, C₆-C₁₁aryl-C₁-C₄alkyl, e.g. benzyl, or 1- or 2-benzethyl, (C₁-C₄alkyl)₁₋₃C₆-C₁₁aryl, e.g. cumenyl, (C₁-C₄alkyl)₁₃C₆-C₁₁aryl-C₁-C₄alkyl, e.g. 2- or 4-methylbenzyl, C₆-C₁₁aryloxy-C₁-C₄alkyl, e.g. phenoxymethyl or 2-phenoxyethyl, C₆-C₁₁aryl-C₁₋₄alkoxy-C₁-C₄alkyl, e.g. benzyloxymethyl or 2-benzyloxyethyl, (C₁-C₄alkyl)₁₋₃silyl-C,-C,alkyl, e.g. 2-trimethylsilylethyl, and (C₁-C₄alkyl)₁₋₃silyloxy-C₂-C₄alkyl, e.g. 2-trimethyl-silyloxyethyl.

A polymer block II, wherein R, represents hydrogen or an ester group of lower polarity, is composed of acrylate or C₁-C₄alkylacrylate repeating units. Representative monomers are selected from the group consisting of acrylic and C₁-C₄alkylacrylic acid-C₁-C₂₄alkyl esters, acrylic and C₁-C₄alkylacrylic acid-C₆-C₁₁aryl-C₁-C₄alkyl esters, acrylic and C₁-C₄alkylacrylic acid-C₆-C₁₁aryloxy-C₁-C₄alkyl esters, acrylic and C₁-C₄alkylacrylic acid-(C₁-C₄alkyl),silyl-oxy-C₂-C₄alkyl esters and acrylic and C₁-C₄alkylacrylic acid-(C₁-C₄alkyl)₃silyl-C₁-C₄alkyl esters.

In a preferred embodiment the polymer block II, wherein R, represents hydrogen or an ester group of lower polarity, is composed of acrylate or methacrylate repeating units. Representative monomers are selected from the group consisting of acrylic and methacrylic acid-C,-C₂₄alkyl esters, acrylic and methacrylic acid-C₆-C₁₁aryl-C₁-C₄alkyl esters, acrylic and methacrylic acid-C₆-C₁₁aryloxy-C₁-C₄alkyl esters, acrylic and methacrylic acid-trimethylsilyl-oxy-C₂-C₄alkyl esters and acrylic and methacrylic acid-trimethylsilyl-C₁-C₄alkyl esters.

Suitable acrylic acid or methacrylic acid-C₁-C₂₄alkyl esters are acrylic acid or methacrylic acid esters esterified by methyl, ethyl, n-butyl, isobutyl, tert-butyl, neopentyl, 2-ethylhexyl, isobornyl, isodecyl, n-dodecyl, n-tetradecyl, n-hexadecyl or n-octadecyl.

Representative acrylic and C₁-C₄alkylacrylic acid-C₆-C₁₁aryl-C₁-C₄alkyl esters are acrylic acid or methacrylic acid esters esterified by benzyl, 2-phenylethyl, 1- or 2-naphthylmethyl or 2-(1-or 2-naphthyl)-elhyl. The phenyl or naphthyl groups may be additionally substituted with one to three additional substituents selected from the group consisting of hydroxy, C₁-C₄alkoxy, e.g. methoxy or ethoxy, halogen, e.g. chloro, and C₁-C₄alkyl, e.g. methyl or methyl.

Representative acrylic and C₁-C₄alkylacrylic acid-C₆-C₁₁aryloxy-C₁-C₄alkyl esters are acrylic acid or methacrylic acid esters esterified by 2-phenoxyethyl or 2-benzyloxyethyl.

Representative acrylic acid and C₁-C₄alkylacrylic acid-hydroxy-C₂-C₄alkyl esters are acrylic acid- or methacrylic acid-2-hydroxyethyl esters (HEA, HEMA), acrylic acid- or methacrylic acid-2-hydroxypropyl ester, acrylic acid- or methacrylic acid-3-hydroxypropyl ester (HPA, HPMA) or acrylic acid- or methacrylic acid-4-hydroxy-n-butyl ester.

Representative acrylic acid- and C₁-C₄alkylacrylic acid-silyloxy-C₂-C₄alkyl esters are acrylic acid- or methacrylic acid-2-trimethylsilyloxyethyl esters (TMS-HEA, TMS-HEMA).

Representative acrylic acid- or C₁-C₄alkylacrylic acid-(C₁-C₄alkyl)₃silyl-C₂-C₄alkyl esters are acrylic acid- or methacrylic acid-2-trimethylsilylethyl esters or acrylic acid- or methacrylic acid-3-trimethylsilyl-n-propyl esters.

In a polymerisate (I) Y represents the direct bond or a bivalent group, e.g. C₁-C₈alkylene, C₃-C₈alkylene substituted by hydroxy, e.g. 2-hydroxy-1,3-propylene, 2(3)-hydroxy-1,4-butylene or 2-hydroxy-1,3-propylene, C₄-C₈alkylene substituted by dihydroxy, e.g. 2,3-dihydroxy-1,4-butylene, or phenylene, e.g. 1,4-or 1,2-phenylene, poly-C₂-C₃alkoxy-C₂-C₃alkyl, e.g. a bivalent substituent derived from polyethylene glycol or polypropylene glycol (= polyethylene oxide or polypropylene oxide) or mixed polymerisates thereof as represented by the following partial formula:

-(CH₂)₂₃-O-[(CH₂)₂₃-O]ₐ-(CH₂)₂₋₃-

wherein a is a numeral from 1 to about 10, e.g. poly-C₂-C₃alkoxy-C₂-C₃alkyl derived from polyethylene glycol as represented by the following partial formula:

-(CH₂)₂O-[(CH₂)₂-O]₄-(CH₂)₂-

or poly-C₂-C₃alkoxy-C₂-C₃alkyl derived from polypropylene glycol as represented by the following partial formula:

-(CH₂)₃O-[(CH₂)₃-O]₄-(CH₂)₄-,

C₃-C₈alkylene interrupted by -O-, -NH-, or -N(C₁-C₄alkyl)-, e.g. -C₂H₄-O-C₂H₄- or -C₂H₄-NH-C₂H₄-, or C₃-C₈alkylene substituted by hydroxy and interrupted by -O-, -NH-, or -N(C₁-C₄alkyl)-, e.g. -(CH₂)₁₂-CH(-OH)-(CH₂)₁₂-NH-C₂H₄-. Such group is illustrated by the partial formula:

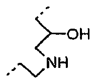

According to an alternative embodiment Y represents a substituent that contains a functional group, which forms a salt with a salt forming group present in the group Z by acid-base reaction, acid addition or quaternisation reaction. A suitable substituent Y that forms such salt "bridge" is C₂-C₈alkyl substituted by ammonio, C₁-C₄alkylammonio, e.g. methyl- or ethylammonio, di-C₁-C₄alkylammonio, e.g. dimethyl- or diethylammonio, tri-C₁-C₄alkylammonio, e.g. trimethyl- or triethylammonio, or di-C₁-C₄alkyl-2-hydroxyethylammonio, e.g. dimethyl-2-hydroxyethylammonio. In that event an acidic group, e.g. carboxy, sulpho or phosphono, is present in the group Z in the dissociated form of its carboxylate, sulphonate or phosphonate anion.

According to a further embodiment Y represents the bivalent group:

-Y₁-Y₂-,

Wherein Y₁ and Y₂ represent fragments of the bivalent group Y or one of Y₁ and Y₂ represents a substituent that contains a functional group, which forms a salt with a salt forming group present in the other group by acid-base reaction, acid addition or quaternisation reaction.

A suitable substituent Y₁ or Y₂ that forms such salt "bridge" is C₂-C₈alkyl substituted by ammonio, C₁-C₄alkylammonio, e.g. methyl- or ethylammonio, di-C₁-C₄alkylammonio, e.g. dimethyl- or diethylammonio, tri-C₁-C₄alkylammonio, e.g. trimethyl- or triethylammonio, or di-C₁-C₄alkyl-2-hydroxyethylammonio, e.g. dimethyl-2-hydroxyethylammonio. In that event an acidic group, e.g. carboxy, sulpho or phosphono, is present in the other group Y₂ or Y₁ in the dissociated form of its carboxylate, sulphonate or phosphonate anion and one of Y₂ or Y₁ represents C₁-C₈alkyl substituted by a carboxylate, sulphonate or phosphonate group.

This is illustrated by the partial formula:

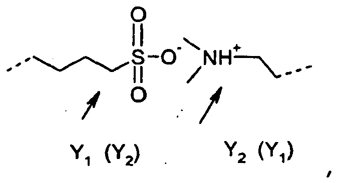

According to a further embodiment Y represents C₁-C₈alkyl substituted by an acidic group, e.g. carboxy, sulpho or phosphono, e.g. carboxymethyl or 1- or 2-carboxyethyl. In that event, a basic group, e.g. amino, C₁-C₄alkylamino, e.g. methyl- or ethylamino, di-C1-C₄alkylamino, e.g. dimethyl- or diethylamino, is present in the group Z in its cationic form as the ammonio or alkylated ammonio group, e.g. C₁-C₄alkylammonio, e.g. methyl- or ethylammonio, di-C₁-C₄alkylammonio, e.g. dimethyl- or diethylammonio or tri-C₁-C₄alkylammonio, e.g. trimethyl- or triethylammonio.

According to a particularly preferred embodiment of the invention Y represents the direct bond or a bivalent group, e.g. C₁-C₈alkylene, C₁-C₆alkylene substituted by hydroxy, e.g. 2-hydroxy-1,3-propylene, C₂-C₈alkyl substituted by ammonio or di-C₁-C₄alkylammonio, e.g. dimethyl- or diethylammonio, *provided that* an acidic group, e.g. carboxy, sulpho or phosphono, is present in the group Z in the dissociated form of its carboxylate, sulphonate or phosphonate anion, or Y represents the partial formula -Y₁-Y₂-, wherein one of Y₁ and Y₂ represents C₂-C₈alkyl substituted by ammonio or di-C₁-C₄alkylammonio, e.g. dimethyl- or diethylammonio, and the other one represents C₁-C₈alkyl substituted by carboxy, sulpho or phosphono.

The functionally effective group Z derived from DABCO and its derivatives is represented by the partial formula: 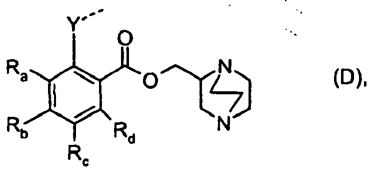 Wherein Rₐ, R_{b}, R_{c} and R_{d} independently of one another represent hydrogen, halogen, e.g. chloro or bromo, C₁-C₄alkyl, e.g. methyl, or C₁-C₄alkoxy, e.g. methoxy.

The bridge group Y is attached directly to the phenyl moiety in the partial formula of above or, in the alternative, forms a salt with a salt forming group present in the group Z by acid-base reaction, acid addition or quaternisation reaction. A suitable substituent Y that forms such salt "bridge" is C₂-C₈alkyl substituted by ammonio or di-C₁-C₄alkylammonio, e.g. dimethyl- or diethylammonio. An acidic group, e.g. carboxy, sulpho or phosphono, is present in the group Z in the dissociated form of its carboxylate, sulphonate or phosphonate anion.

This is illustrated by the partial formula:

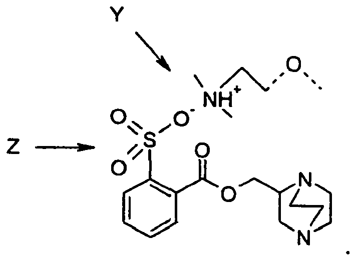

A starting material of the formula: 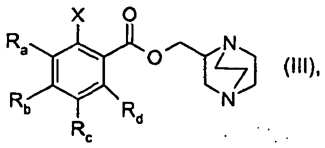 Wherein
X represents carboxy, sulpho or phosphono; and
Rₐ, R_{b}, R_{c} and R_{d} independently of one another represent hydrogen, halogen, e.g. chloro or bromo, C₁-C₄alkyl, e.g. methyl, or C₁-C₄alkoxy, e.g. methoxy;
is novel and also subject matter of the present invention.

According to a preferred embodiment the invention also relates to a starting material of the formula: 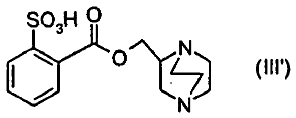 (Rₐ, R_{b}, R_{c} and R_{d} =H).

According to an alternative embodiment the functionally effective group Z derived from DABCO and its derivatives is represented by the partial formula:

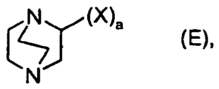

Wherein the index a represents one or zero (= direct bond) and X represents a bivalent functional group, e.g. -C(=O)-O-, -C(=O)-NH-, -CH₂-O-, -O-, -NH- or -N(C₁-C₄alkyl)-, which is attached to Y.

A starting material of the formula: 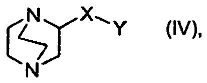 Wherein
X represents a bivalent functional group selected from the group consisting of -C(=O)-NH-, -CH₂-O-, -O-, -NH- and -N(C₁-C₄alkyl)-; and
Y represents C₁-C₄alkyl, hydroxy-C₂-C₄alkyl, amino-C₂-C₄alkyl, acryloyl or methacryloyl;
is novel and also subject matter of the present invention.

According to a preferred embodiment the invention also relates to the following starting materials of the formulae: 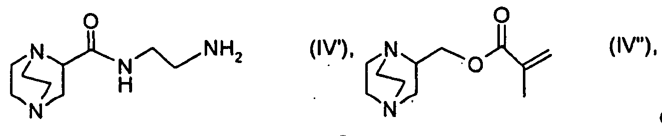 Or

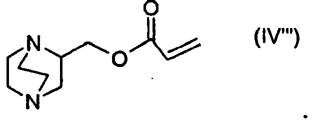

A particularly preferred embodiment of the invention relates to a polymerisate (I), wherein
A and B represent polymer chain terminal groups; R₁, R₁' and R₁" independently of one another represent hydrogen or methyl;
R₂ represents an ester group selected from the group consisting of mono- or dihydroxy-C₂-C₄-alkyl, e.g. 2-hydroxyethyl, 2,3-dihydroxypropyl or 4-hydroxyl-n-butyl, trihydroxy-C₃-C₅alkyl, amino-C₂-C₁₈alkyl, e.g. 2-aminoethyl or 3-amino-n-propyl, ammonio-C₂-C₁₈alkyl, e.g. 2-ammonioethyl or 3-ammonio-n-propyl, C₁-C₄alkylamino-C₂-C₁₈alkyl, e.g. 2-N-methylaminoethyl or 3-N-methylamino-n-propyl, di-C₁-C₄alkylamino-C₂-C₁₈alkyl, e.g. 2-N,N-dimethylaminoethyl or 3-N,N-dimethylamino-n-propyl, tri-C₁-C₄alkylammonio-C₂-C₁₈alkyl, e.g. 2-trimethylammonioethyl or 3-trimethylammonio-n-propyl, hydroxy-C₂-C₄alkylamino-C₂-C₁₈alkyl, e.g. 2-N-2-hydroxyethylaminoethyl, C₁-C₄alkyl-(hydroxy-C₂-C₄alkyl)amino-C₂-C₁₈alkyl, e.g. 2-[N-(2-hydroxyethyl)-N-methylamino]-ethyl, di-C₁-C₄alkyl-(hydroxy-C₂-C₄alkyl)ammonio-C₂-C₁₈alkyl, e.g. 2-[N,N-dimethyl-N-(2-hydroxyethyl)-ammonio]-ethyl, and C₁-C₄alkyl substituted by carboxy, sulpho or phosphono, e.g. 2-carboxyethyl or 2-sulphoethyl.
R₃ represents C₁-C₈alkyl, e.g. methyl, ethyl, isopropyl, n-butyl or 2-ethylhexyl;
Y and Z are as defined in claim 1,
The indices p and x represent zero;
And the numerals II and III and the indices q, r, y and z are as defined above.

A highly preferred embodiment of the invention relates to a a polymerisate (I), wherein
A and B represent polymer chain terminal groups;
R₁, R₁' and R₁" independently of one another represent hydrogen or methyl;
R₂ represents an ester group selected from the group consisting of C₂-C₄alkyl substituted by amino, ammonio, C₁-C₄alkylamino, e.g. methyl- or ethylamino, di-C₁-C₄alkylamino, e.g. dimethyl- or diethylamino, tri-C₁-C₄alkylammonio, e.g. trimethyl- or triethylammonio, or di-C₁-C₄alkyl-2-hydroxyethylammonio, e.g. dimethyl-2-hydroxyethylammonio;
R₃ represents C₁-C₈alkyl;
y and z are as defined in claim 1
The indices p and x represent zero;
The indices q and r represent one;
The indices y and z represent numerals greater than one;
And the numerals II and III are as defined above.

A further embodiment of the present invention relates to a process for preparing the polymerisate (I), which comprises
a) Esterification of a polymerisate of the formula: 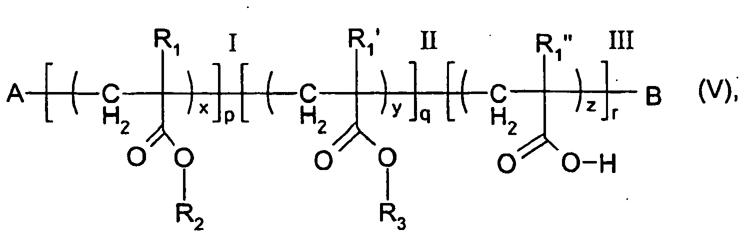 Wherein
   A, B, R₁, R₁', R₁", the numerals I, II and III and the indices p, q, r, x, y and z are as defined above, or a reactive functional derivative thereof, with

   H-Y-Z (VI);
b) Polymerisation of the individual polymer blocks I, II and III or any multiples thereof by the method of controlled polymerisation; and

Optional replacement of the polymer chain terminal group B with a different chain terminal group.

According to a specific embodiment of process a) a polymerisate (I) is prepared, wherein Y represents a bivalent group, by reacting a polymerisate of the formula: 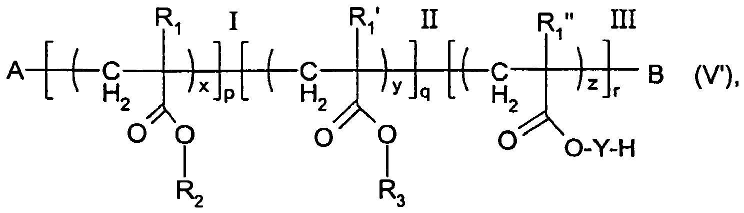 Wherein
A, B, R₁, R₁', R₁", the numerals I, II and III and the indices p, q, r, x, y and z are as defined above, and Y represents a bivalent group, with

H-Z (VI')

.

The polymerisation process according to the method of controlled, particularly "living" polymerisation, such as atomic transfer radical polymerisation (ATRP), may be carried out in the presence of water or an organic solvent or mixtures thereof. Additional co-solvents or surfactants, such as glycols or ammonium salts of fatty acids, may be added to the reaction mixture. The amount of solvent should be kept as low as possible. The reaction mixture may contain the above-mentioned monomer units or polymer blocks in an amount of 1.0 to 99.9% by weight, preferably 5.0 to 99.9% by weight, and especially preferably 50.0 to 99.9% by weight, based on the monomers present in the polymerisate.

If organic solvents are used, suitable solvents or mixtures of solvents are typically pure alkanes (hexane, heptane, octane, isooctane), hydrocarbons (benzene, toluene, xylene), alkanols (methanol, ethanol, ethylene glycol, ethylene glycol monomethyl ether), esters (ethyl, n-propyl, n-butyl or n-hexyl acetate) and ethers (diethyl or dibutyl ether, ethylene glycol dimethyl ether, tetrahydrofuran), or mixtures thereof.

If water is used as a solvent the reaction mixture can be supplemented with a water-miscible or hydrophilic co-solvent. The reaction mixture will then remain in a homogeneous single phase throughout the monomer conversion. Any water-soluble or water-miscible co-solvent may be used, as long as the aqueous solvent medium is effective in providing a solvent system, which prevents precipitation or phase separation of the reactants or polymer products until full completion of the polymerisation. Exemplary co-solvents useful in the process may be selected from the group consisting of aliphatic alcohols, glycols, ethers, glycol ethers, pyrrolidines, N-alkylpyrrolidinones, N-alkylpyrrolidones, polyethylene glycols, polypropylene glycols, amides, carboxylic acids and salts thereof, esters, organosulphides, sulphoxides, sulphones, alcohol derivatives, hydroxyether derivatives such as butyl carbitol or cellosolve, amino alcohols, ketones, and the like, as well as derivatives and mixtures thereof. Specific examples include methanol, ethanol, propanol, dioxan, ethylene, diethylene, propylene or dipropylene glycol, glycerol, tetrahydrofuran, and other water-soluble or water-miscible materials, and mixtures thereof. When mixtures of water and water-soluble or water-miscible organic solvents are selected for the process, the water to co-solvent weight ratio is typically in the range of about 99:1 to about 10:90.

When monomer mixtures or monomer/polymer mixtures are used, the calculation of mol% is based on an average molecular weight of the mixture.

The polymerisation temperature may range from about 50°C to about 180°C, preferably from about 80°C to about 150°C. At temperatures above about 180°C, the controlled conversion of the monomers into polymers may decrease, and undesirable by-products like thermally initiated polymers are formed or decomposition of the components may occur.

The polymerisation process by the method of controlled, particularly "living" polymerisation, is carried in the presence of a suitable catalyst capable of activating ATRP. Such catalyst is a transition metal complex catalyst salt present as an oxidisable complex ion in the lower oxidation state of a redox system. Preferred examples of such redox systems are selected from the group consisting of Group V(B), VI(B), VII(B), VIII, IB and IIB elements, such as Cu⁺/Cu²⁺, Cu⁰/Cu⁻, Fe⁰/Fe²⁻, Fe²⁺/Fe³⁺, Cr²⁺/Cr³⁺, Co⁺/Co²⁺, Co²⁺/Co³⁺, Ni⁰/Ni⁺, Ni⁺/Ni²⁺, Ni²⁺/Ni³⁺, Mn⁰/Mn²⁺, Mn²⁺/Mn³⁺, Mn³⁻/Mn⁴⁻ or Zn⁻/Zn²⁻.

The ionic charges are counterbalanced by anionic ligands commonly known in complex chemistry of transition metals, such hydride ions (H⁻) or anions derived from inorganic or organic acids, examples being halides, e.g. F⁻, Cl⁻, Br⁻ or I⁻, halogen complexes with transition metals, such as Cu⁻Br₂⁻, halogen complex ions of the type BF₄⁻, PF₆⁻, SbF₆⁻, or AsF₆⁻, anions of oxygen acids, alcoholates or acetylides or the anion of cyclopentadiene.

Anions of oxygen acids are, for example, sulphate, phosphate, perchlorate, perbromate, periodate, antimonate, arsenate, nitrate, carbonate, the anion of a C₁-C₈carboxylic acid, such as formate, acetate, propionate, butyrate, benzoate, phenylacetate, mono-, di- or trichloro- or -fluoroacetate, sulphonates, for example methane-, ethane-, n-propane- or n-butanesulph-onate, trifluoromethanesulphonate (triflate), unsubstituted or C₁-C₄alkane-, C₁-C₄alkoxy- or halo-, especially fluoro-, chloro- or bromo-substituted benzenesulphonate orphenylmeth-anesulphonate, for example tosylate, mesylate, brosylate, p-methoxy- or p-ethoxybenzene-sulphonate or 2,4,6-triisopropanesulphonate, phosphonates, for example methyl, ethyl, n-propyl, n-butyl, phenyl, p-methylphenyl or benzylphosphonate, and also C₁-C₁₂alcoholates, such as straight chain or branched C₁-C₁₂alcoholates, e.g. methanolate or ethanolate.

Anionic and neutral ligand forming agents may also be present up to the preferred coordination number of the complex cation, especially four, five or six. Additional negative charges are counterbalanced by cations, especially monovalent cations such as Na⁺, K⁺, NH₄⁺ or (C₁-C₄alkyl)₄N⁺.

Suitable neutral ligand forming agents generate inorganic or organic neutral ligands commonly known in complex chemistry of transition metals. They coordinate to the metal ion through a σ-, π-, µ- or η-type bonding or any combinations thereof up to the preferred coordination number of the complex cation. Suitable inorganic ligands are selected from the group consisting of aquo (H,O), amino, nitrogen, carbon monoxide and nitrosyl. Suitable organic ligands are derived from ligand forming agents selected from the group consisting of phosphines, e.g. (C₆H₅)₃P₂ (i-C₃H₇)₃P, (C₅H₉)₃P or (C₆H₁₁)₃P, di-, tri-, tetra- and hydroxyamines, such as ethylenediamine, ethylenediaminetetraacetate (EDTA), N,N-dimethyl-N',N'-bis(2-dimethylaminoethyl)-ethylenediamine (Me₆TREN), catechol, N,N'-dimethyl-1,2-benzene-diamine, 2-(methylamino)phenol, 3-(methylamino)-2-butanol or N,N'-bis(1,1-dimethylethyl)-1,2-ethanediamine, N,N,N',N",N"-pentamethyldiethylenetriamine (PMDETA), C,-C₈-glycols or glycerides, e.g. ethylene or propylene glycol or derivatives thereof, e.g. di-, tri-or tetraglyme, and mono- or bidentate heterocyclic e⁻-donor ligands.

Heterocyclic e⁻ donor ligands are derived, for example, from unsubstituted or substituted heteroarenes from the group consisting of furan, thiophene, pyrrole, pyridine, bis-pyridine, picolylimine, γ-pyran, γ-thiopyran, phenanthroline, pyrimidine, bis-pyrimidine, pyrazine, indole, coumarone, thionaphthene, carbazole, dibenzofuran, dibenzothiophene, pyrazole, imidazole, benzimidazole, oxazole, thiazole, bis-thiazole, isoxazole, isothiazole, quinoline, bis-quinoline, isoquinoline, bis-isoquinoline, acridine, chromene, phenazine, phenoxazine, phe-nothiazine, triazine, thianthrene, purine, bis-imidazole and bis-oxazole.

The oxidisable transition metal complex catalyst can be formed in a separate preliminary reaction step from its ligands or is preferably formed *in-situ* from its transition metal salt, e.g. Cu(I)Cl, which is then converted to the complex compound by addition of compounds corresponding to the ligands present in the complex catalyst, e.g. by addition of ethylenediamine, EDTA, Me₄TREN or PMDETA.

The transition metal in the oxidisable transition metal complex catalyst salt is converted from its lower oxidation state in the above-mentioned redox systems to its higher oxidation state. In a preferred embodiment of the process a Cu(I) complex catalyst salt is converted to the corresponding Cu(II) oxidation state.

Because the present polymerisation by ATRP is a "living" polymerisation, it can be started and terminated practically at will. The copolymers (I) as obtained by the process have a low polydispersity. Preferably the polydispersity is from 1.01 to 2.20, more preferably from 1.01 to 1.90, and most preferably from 1.01 to 1.50.

The various advantages of the process of this type that allow a large range of polymerisation reactions are described by K. Matyjaszewski in ACS Symp. Ser. Vol. 685 (1998), pg. 2-30.

According to an alternative polymerisation method, the polymerisation is carried out by applying the method of the so-called controlled polymerisation with >N-O-R compounds in the presence of a suitable initiator molecule as described above.

According to another alternative polymerisation method, the polymerisation is carried out by applying the method of the so-called controlled polymerisation with >N-O• compounds in the presence of a suitable initiator molecule as described above.

The process conditions are known from the literature and are similar to the ones mentioned above with regard to ATRP.

In a polymerisate (I) one of A and B represents a polymer chain terminal group. A suitable chain terminal group is a radically transferable group, hydrogen, a polymerisable chain terminal group or a saturated polymer chain terminal group, which is formed by polymerisation or copolymerisation of a polymerisable chain terminal group.

A radically transferable group is a group that results from ATRP with suitable initiators as described above, such as chlorine or bromine.

An alternative embodiment relates to compositions comprising a polymerisate (I), particularly a copolymer, e.g. a macro-monomer, wherein one of A and B is a polymerisable chain terminal group. Such group contains at least one polymerisable, ethylenically unsaturated monomer unit.

A preferred polymerisable chain terminal group is an ethylenically unsaturated group corresponding to monomers selected from the group consisting of styrenes, acrylic acid, C₁-C₄alkylacrylic acid, amides, anhydrides and salts of acrylic acid or C₁-C₄alkylacrylic acid, acrylic acid-C₁-C₂₄alkyl esters and C₁-C₄alkylacrylic acid-C₁-C₂₄alkyl esters, acrylonitrile, methacrylonitrile, vinyl substituted heterocycles, styrene sulphonic acid and salts, vinyl benzoic acid and salts, vinyl formamide and amidosulphonic acid derivatives.

The macro-monomers are prepared by known methods such as the ones described *WO 01*/*51534,* e.g. by reacting a polymerisate (I), particularly a copolymerisate, obtainable by ATRP, wherein one of A and B is a radically transferable atom or group, e.g. halogen, with ethylenically unsaturated monomers as defined above.

The elimination of the radically transferable group, e.g. halogen, with a polymerisable chain terminal group is advantageously performed in such a way that the polymerisate is dissolved in a solvent and the monomeric compound corresponding to A or B is added at higher temperatures in the presence of a strong but non-nucleophilic base, such as diazabicycloundecene (DBU), or similar bases. The reaction takes place within a temperature range from room temperature to the boiling temperature of the reaction mixture, preferably from room temperature to 100°C.

A polymerisate (I), particularly a copolymer wherein one of A or B is a saturated polymer chain terminal group, e.g. a comb polymer, is obtained by further polymerising a macro-monomer of above with ethylenically unsaturated monomers by any known method of polymerisation, such as radical polymerisation with initiators of the nitrile type, e.g. AIBN, or peroxides, e.g. benzoyl peroxide or di-tert-butyl peroxide. In the alternative the copolymerisation of the macro-monomer with co-monomers can also be conducted by ATRP or any other method of controlled radical polymerisation, such as nitroxyl mediated controlled free radical polymerisation.

Depending on the structure and amount of the monomers used, the polymerisates (I) of the invention may have different properties. The polymerisates (I) show a longer persistency, due to their excellent compatibility with any polymeric substrate and their appropriate molecular weight that avoids any additive loss caused by thermal effects.

Another embodiment of the invention relates to a composition comprising
a) A composition of matter susceptible to degradation induced by light, heat or oxidation; and
b) The polymerisate (I), wherein A, B, R₁, R,', R,", R₂, R₃, Y, Z, the numerals I, II and III and the indices p, q, r, x, y and z are as defined above.

A particularly preferred embodiment of the invention relates to a composition comprising
a) A composition of matter susceptible to degradation induced by light, heat or oxidation selected from the group consisting of LDPE (= low density polyethylene), LLDPE (= linear low density polyethylene), EVA (= ethylene vinyl acetate), PP (= polypropylene) and PET (= polyethyleneterephthalate); and
b) The polymerisate (I), wherein A, B, R₁, R₁', R₁", R₂, R₃, Y, Z, the numerals I, II and III and the indices p, q, r, x, y and z are as defined above.

The additives or auxiliaries listed above selected from the group consisting of antioxidants, UV-absorbers, light stabilisers, metal deactivators, phosphites, phosphines, phosphonites, hydroxylamines, nitrones, thiosynergists, peroxide scavengers, polyamide stabilisers, basic co-stabilisers, nucleating agents, fillers, reinforcing agents, benzofuranones, indolinones and other additives are present as optional components in the composition.

The polymers and compositions obtainable in accordance with the invention are particularly suitable for producing structural polymers, wherein protection against UV-radiation is desirable, such as protective foils for greenhouses, packaging foils, mouldings for cars, boats, leisure articles, pallets, pipes, sheets, etc.

The present invention, therefore, also relates to a method for stabilising a composition of matter against degradation induced by light, heat or oxidation, which comprises incorporating within the composition of matter the polymerisate (I), wherein A, B, R₁, R₁', R₁", R₂, R₃, Y, Z, the numerals I, II and III and the indices p, q, r, x, y and z are as defined above.

A particularly preferred embodiment of the present invention relates to a pigment composition comprising
a') 0.1-99.9% by weight dispersible organic or inorganic pigment particles; and
b') 0.1-99.9% by weight of a polymerisate (I), wherein A, B, R₁, R₁', R₂", R₂, R₃, Y, Z, the numerals I, II and III and the indices p, q, r, x, y and z are as defined above.

Suitable dispersible organic pigments are pigments or pearlescent flakes selected from the group consisting of azo, disazo, naphthol, benzimidazolone, azo-condensation, metal complex, isoindolinone, and isoindoline pigments, the chinophthalon pigment, dioxazine pigment and the polycyclic pigment group consisting of indigo, thioindigo, quinacridones, phthalocyanines, perylenes, perionones, anthraquinones, such as aminoanthraquinones or hydroxyanthraquinones, anthrapyrimidines, indanthrones, flavanthrones, pyranthrones, anthantrones, isoviolanthrones, diketopyrrolopyrrole, and carbazoles, e.g. carbazole violet, and the like. Further examples of organic pigments can be found in the monograph: W. Herbst K. Hunger "lndustrielle Organische Pigmente" 2nd Edition, 1995, VCH Verlagsgesellschaft ISBN: 3-527-28744-2.

Suitable dispersible inorganic pigments are selected from the group consisting of metallic flakes, such aluminium, aluminium oxide, calcium carbonate, silicon oxide and silicates, iron(III)oxide, chromium(III)oxide, titanium(IV)oxide, zirconium(IV)oxide, zinc oxide, zinc sulphide, zinc phosphate, mixed metal oxide phosphates, molybdenum sulphide, cadmium sulphide, carbon black or graphite, vanadates, such as bismuth vanadate, chromates, such as lead(IV)chromate, and molybdates, such as lead(IV)molybdate, and mixtures, crystal forms or modifications thereof, such as rutil, anatas, mica, talcum or kaolin.

The composition may contain in addition to component a') - pigments- and component b') - the polymerisate (I)- additional dispersing agents, conventional binder materials for preparing coating compositions, e.g. paints, fillers, and other conventional additives, in particular conventional additives selected from the group consisting of surfactants, light stabilisers, UV-absorbers, anti-foaming agents, dispersion stabilisers, dyes, plasticisers, thixotropic agents, drying catalysts, anti-skinning agents and levelling agents. The composition may also contain conventional additives, such as antioxidants, flow control agents, rheology control agents such as fumed silica, micro gels, screeners, quenchers or absorbers. These additives can be added individually or in mixtures, with or without so-called sterically hindered amines (HALS).

The composition may contain the above-mentioned pigment component a') in an amount of 0.1 to 99.9% by weight, preferably 0.1 to 50.0% by weight, and particularly preferably 1.0 to 30.0% by weight.

The present invention also relates to a pigment dispersion comprising
a") Dispersed organic or inorganic pigment particles; and
b") A dispersing agent consisting of at least one polymerisate (I), wherein A, B, R₁, R₁', R₁", R₂, R₃, Y, Z, the numerals I, II and III and the indices p, q, r, x, y and z are as defined above; And a carrier liquid comprising water, organic solvents and mixtures thereof.

The term dispersing agent is defined within the limits of a so-called solid/ liquid dispersion, as opposed to other types of dispersions, such as liquid/ liquid (e.g. emulsions) or solid/gas (e.g. fumes) dispersions. Solid/liquid dispersions that apply here consist of a two-phase system containing insoluble solid particles or solid particles of low solubility within a liquid. The dispersing agent, in the present case the polymerisate (I), as defined above, enables solid particles, in the instant case pigment particles, to be distributed homogeneously within a liquid phase, e.g. water or organic solvent, or mixtures of both, or a polymer melt. Homogeneous distribution means that the concentration of the solid particles within the liquid phase in any volume fraction of the liquid phase is identical or approximately identical (even distribution of the solid particles).

According to a further embodiment of the invention the component b") of the pigment dispersion defined above additional contains a dispersing agent that forms a salt with the polymerisate (I) by acid-base reaction, acid addition or quaternisation reaction.

In particular, the additional dispersing agent contains an acidic group, such as the sulpho, carboxy or phosphono group, which forms a salt by reaction with a basic group, such as the free amino group or a primary, secondary or tertiary amino group, which is present in one of the polymer blocks I, II, or III or the chain terminal group A or B of the polymer component (I). In an alternative embodiment an acidic group, such as the sulpho, carboxy or phosphono group, is present in one of the polymer blocks I, II or III or the chain terminal group A or B of the polymer component (I). The additional dispersing agent then contains the free amino group or a primary, secondary or tertiary amino group.

A suitable additional dispersing agent that contains an acidic group, such as the sulpho, carboxy or phosphono group, an organic acid selected from the group consisting polycyclic sulphonic, mono- or polycyclic carboxylic or phosphonic acids, aliphatic sulphonic, carboxylic or phosphonic acids substituted with mono- or polycyclic groups, C₁-C₈alkyl halides substituted with mono- or polycyclic groups and C₁-C₄alkyl esters of mono- or polycyclic sulphonic acids, e.g. p-toluene sulphonic acid or any other sulphonic acid or carboxylic acids selected from the group listed below:
Some sulphonic acids are listed below as non-limiting examples:

| | |
|---|---|
| 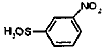 | 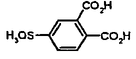 |
| 3-nitrobenzene sulphonic acid | 4-sulphophthalic acid |
| 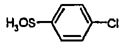 | 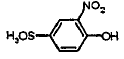 |
| 4-chlorobenzene sulphonic acid | 4-hydroxy-3-nitrobenzene sulphonic acid |
| 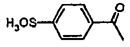 | 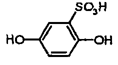 |
| 4-acetylsulphonic acid | 2,5-dihydroxybenzene sulphonic acid |
| 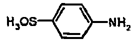 | 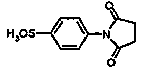 |
| sulphanilic acid | 4-succinimidobenzenesulphonic acid |
| 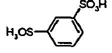 | 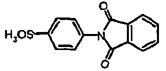 |
| benzene-1,3-disulphonic acid | 4-phthalimidobenzenesulphonic acid |
| 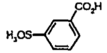 | 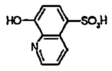 |
| 3-sulphobenzoic acid | 8-hydroxyquinoline sulphonic acid |
| 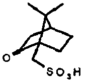 | 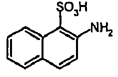 |
| (+-)camphor-10-sulphonic acid | 2-naphthylamine-1-sulphonic acid and isomers |
| 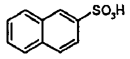 | 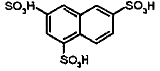 |
| naphthalene-2-sulphonic acid | naphthalene-trisulphonic acid, isomer mixture e.g. naphthalene 1,3,6-trisulphonic acid |
| 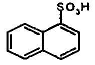 | 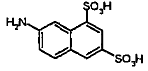 |
| naphthalene-1-sulphonic acid | 2-naphthylamine-6,8-disulphonic acid and isomers |
| 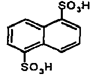 | 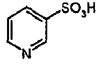 |
| Naphthalene-1,5-disulphonic acid and isomers | pyridine-3-sulphonic acid |
| 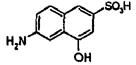 | |
| 7-amino-1-naphthol-3-sulphonic acid | |

Some carboxylic acids are listed below as non-limiting examples:

| | |
|---|---|
| 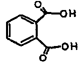 | 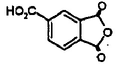 |
| phthalic acid | trimellitic acid anhydride |
| 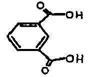 | 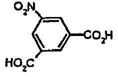 |
| isophthalic acid | 5-nitro-isophthalic acid |
| 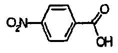 | 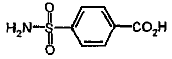 |
| 4-nitrobenzoic acid and isomers | benzoic acid-4-sulphamide |
| 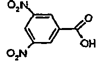 | 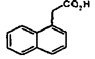 |
| 3,5-dinitrobenzoic acid and isomers | 1-naphthylacetic acid |
| 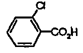 | 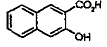 |
| 2-chlorobenzoic acid and isomers | 3-hydroxynaphthoic acid |
| 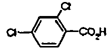 | 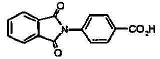 |
| 2,4-dichlorobenzoic acid and isomers | N-(4-carboxyphenyl)phthalimide |
| 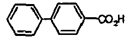 | 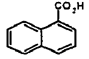 |
| 4-phenylbenzoic acid | 1-naphthoic acid |
| 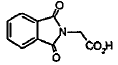 | 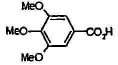 |
| phthaloyl glycine | 3,4,5-trimethoxybenzoic acid |
| 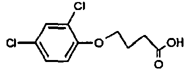 | 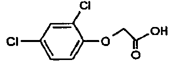 |
| 3-(2,4-dichlorophenoxy)butyric acid | 2,4-dichlorophenoxyacetic acid |
| 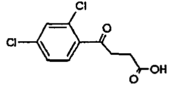 | 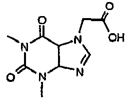 |
| 3-oxo-3-(2,4-dichlorophenyl)butyric acid | theophylline-7-acetic acid |
| 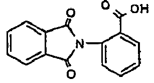 | 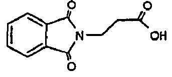 |
| 2-phthalimidobenzoic acid | 2-phthalimidopropanoic acid |
| 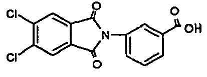 | 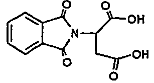 |
| 3-(4,5-dichlorophthaloylimido)benzoic acid | 2-phthaloylimidosuccinic acid |
| 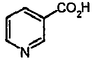 | 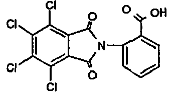 |
| nicotinic acid | 2-(3,4,5,6-tetrachlorophthaloylimido)benzoic acid |
| 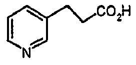 | 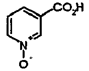 |
| 3-pyridinepropionic acid | nicotinic acid N-oxide |
| 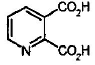 | 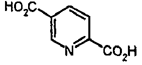 |
| quinolinic acid | pyridine-2,5-dicarboxylic acid |
| 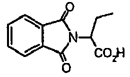 | 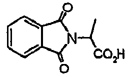 |
| 2-phthalimidobutyric acid | 2-phthalimidopropionic acid |
| 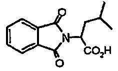 | 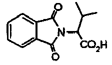 |
| 4-methyl-2-phthalimidovaleric acid | 2-phthalimidoisoyaleric acid |
| 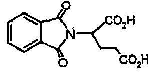 | 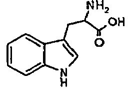 |
| 2-phthalimidoqlutaric acid | Tryptophane |
| 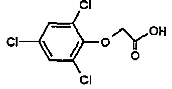 | 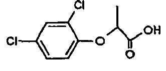 |
| 2,4,6-trichlorophenoxyacetic acid | 2-(2,4-dichlorophenoxy)-propionic acid |
| 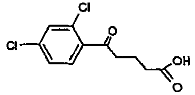 | 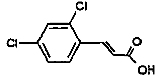 |
| 3-(2,4-dichlorobenzoyl)-butyric acid | 2,4-dichlorophenylacrylic acid |
| 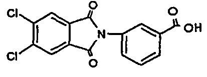 | 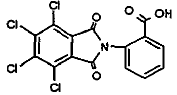 |
| 3-(4,5-dichlorophthalimido)-benzoic acid | 2-tetrachlorophthalimidobenzoic acid |
| 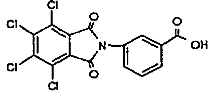 | 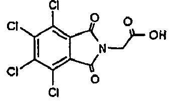 |
| 3-tetrachlorophthalimidobenzoic acid | tetrachlorophthaloylglycine |
| 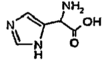 | 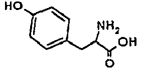 |
| histidine | Tyrosine |
| 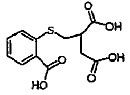 | 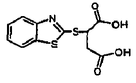 |
| 2-(2-carboxyphenylthiomethyl)succinic acid | 2-(2-benzothiazolylthio)succinic acid |
| 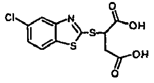 | 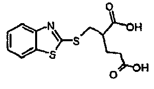 |
| 2-[2-(5-chlorobenzothiazolylthio)]succinic acid | 2-(2-benzothiazolylthio)succinic acid |
| 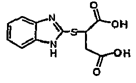 | 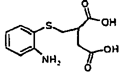 |
| 2-(2-benzimidazolylthio)succinic acid | 2-(2-aminophenylthiomethyl)succinic acid |
| 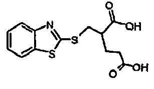 | |
| 2-(2-benzimidazolylthio)valeric acid | |

The pigment dispersions are useful for a large variety of technical applications, e.g. for the preparation of inks or printing inks in printing processes, such as flexographics, screen, packaging, security ink, intaglio or offset printing, for pre-press stages and textile printing, for office, home or graphic applications, for paper goods, pens, felt tips, fibres tips, card, wood, (wood) stains, metal, inking pads, or inks for impact printing, (with impact-pressure ink ribbons), or for the preparation of colorants, for coatings, e.g. paints, for textile decoration and industrial marking, for roller coatings or powder coatings or for automotive finishes for high-solids, for low-solvent, water containing or metallic coating materials or for water-containing formulations, water-containing paints, or for the preparation of pigmented plastics, fibres, platters or mold carriers, or for pigmented radiation curable coatings, or for pigmented gel coats, laminates, composites, adhesives and casting resins, or for non-impact printing material, for digital printing, thermal wax transfer printing, ink-jet printing or thermal transfer printing, or for the preparation of colour filters, especially for visible light in the range from 400 to 700 nm, which can be used for the production of liquid crystal displays (LCD) or charge combined devices (CCD), for the preparation of cosmetics, toners, or polymeric ink particles for the preparation of toners, such as dry or liquid copy toners or electro photographic toners. The toners can be prepared in master batches and be used in turn in master batches for the preparation of coloured plastics.

According to an alternative embodiment of the invention the pigment dispersions are useful in colour filter systems, which are useful in electro-optical systems such as TV screens, liquid crystal displays, charge coupled devices, plasma displays or electro luminescent displays and the like.

There are several ways to manufacture these colour filters, which follow two mainstreams:
- Direct patterning during applying;
- Patterning after applying the pigment.

Direct patterning can be obtained by several printing techniques, such as impact (off-set, flexography, stamping, letterpress etc.) as well as non-impact (ink jet techniques).

Other direct patterning techniques are based on lamination processes, electronic discharging processes like electro-deposition and some special colour proofing methods, like the so-called Chromalin® process (DuPont).

The colour filters of the invention contain the pigment compositions of the invention judiciously in a concentration of from 1.0 to 75.0% by weight, preferably from 5.0 to 50.0% by weight, with particular preference from 25.0 to 40.0% by weight, based on the overall weight of the pigmented layer.

The invention therefore likewise provides a colour filter comprising a transparent substrate and a layer comprising from 1.0 to 75.0% by weight, preferably from 5.0 to 50.0% by weight, with particular preference from 25.0 to 40.0% by weight, based on the overall weight of the layer, of a pigment composition of the invention or the individual components of said composition dispersed in a high molecular mass organic material. The substrate is preferably essentially colourless (T ≥ 95% all over the visible range from 400 to 700 nm). The instant printing inks or photo resists for making colour filters contain the pigment compositions of the invention judiciously in a concentration of from 0.01 to 40.0% by weight, preferably from 1.0 to 25.0% by weight, with particular preference from 5.0 to 10.0% by weight, based on the overall weight of the printing ink or photo resist.

The invention therefore likewise provides a pigment dispersion for producing colour filters comprising from 0.01 to 40.0% by weight, preferably from 1.0 to 25.0% by weight, with particular preference from 5.0 to 10.0% by weight, based on the overall weight of the pigment dispersion.

Another embodiment of the invention relates to the use of the pigment dispersion defined above for preparing ink compositions or colour filters by applying the methods described above.

Another embodiment of the invention relates to the process for preparing the above-mentioned pigment dispersion, which comprises preparing the polymerisate (I) by copolymerising the polymer fragments I, II and III by the method of controlled or "living" polymerisation and optionally replacing or polymerising further one of the chain terminal groups A or B; and adding the polymerisate (I) to dispersible pigment particles and optionally binder materials, fillers or other conventional additives.

According to a preferred embodiment the process comprises the additional step of isolating the pigment and the polymerisate (I) and optionally additional conventional additives in a solid product form essentially free from liquid carrier medium.

According to the process mentioned above, the polymerisate (I) is added in pure form, optionally in combination with suitable additives, e.g. the acids mentioned above, as a solution or dispersion to dispersible pigment particles and optionally binder materials, fillers or other conventional additives.

In an alternative embodiment of the process the polymerisate (I) can be further processed and used in most cases without any further purification step. This is an important advantage when industrial scale-up is intended. The pigments are dispersed in the presence of the polymerisate (I) dispersant by using conventional techniques, such as high speed mixing, ball milling, sand grinding, attritor grinding or two or three roll milling. The resulting pigment dispersion may have a pigment to dispersant binder weight ratio of about 0.1:100 to 1500: 100.

The organic solvents present in the dispersion are mentioned above, cf. process, and preferably are commonly used solvents in coatings technology. For water based coatings applications, aside from water, preferably polar, water-miscible solvents, such as C₁-C₄alkohols, e.g. methanol, ethanol, or isopropanol, glycol ethers like butyl glycol, or methoxypropylene glycol, polyols, e.g. glycerol, or ethylene, diethylene, triethylene, triethylene or propylene glycol are used. For solvent based coating systems, preferably less polar solvents like aliphatic hydrocarbons, esters like butyl acetate, or glycol ethers like methoxypropylene glycol or glycol ether esters like methoxypropylene glycol acetate are used.

In another preferred embodiment of the process fine pigment dispersions are prepared by mixing the pigments with a solution of the polymerisate (I) or an aqueous emulsion of the polymerisate (I), concentrating the resulting mixture by distilling off the solvents and/or water, preferably to dryness, and optionally further subjecting the resulting concentrate to thermal and/or mechanical treatment to prepare a mixture comprising pigments and the polymerisate (I), which may then be subsequently dispersed in aqueous and/or organic solvents. According to this process, the solid composition of pigment and the polymerisate (I) is easy to disperse and does not require any time and energy intensive grinding to be incorporated into e.g. a paint formulation.

The above-mentioned methods for preparing the composition, such as high speed mixing, ball milling, sand grinding, attritor grinding or two or three roll milling may in the alternative be employed when preparing the dispersion.

The present invention also relates to the use of the pigment dispersion described above for preparing coating compositions, prints, images, inks, lacquers, pigmented plastics, adhesives, casting resins, filled composites, glass fibre reinforced composites, laminates, cement based construction materials like plaster and tile adhesives.

Likewise of particular interest is a specific embodiment of the above-mentioned process for preparing the dispersion, wherein coating compositions, for example paints, are prepared. The invention therefore also relates to compositions, wherein film-forming binders for coatings are added to the composition comprising components a) and b) described above.

The novel coating composition preferably comprises 0.01 - 100.0 parts by weight of the combined components a) and b) in the composition, in particular 0.05 - 50.0 parts, especially 0.1 - 20.0 parts, per 100 parts by weight of solid binder.

Suitable binders are the ones customarily used, for example the ones described in Ullmann's Encyclopedia of Industrial Chemistry, 5th Edition, Vol. A18, pp. 368-426, VCH, Weinheim 1991, Germany. In general, the film-forming binder is based on a thermoplastic or thermosetting resin, predominantly on a thermosetting resin. Examples thereof are alkyd, acrylic, polyester, phenolic, melamine, epoxy and polyurethane resins and mixtures thereof. Also resins curable by radiation or air-drying resins can be used.

Binders that may be used are any cold- or hot-curable binders. The addition of a curing catalyst may be advantageous. Suitable catalysts that accelerate the curing of binders are described, for example, in *Ullmann's, Vol. A18, loc. cit., p. 469*.

Preference is given to coating compositions comprising a functional acrylate resin and a cross linking agent. Examples of coating compositions containing specific binders are:
- Paints based on cold- or hot-cross linkable alkyd, acrylate, polyester, epoxy or melamine resins or mixtures of such resins, if desired with addition of a curing catalyst;
- Two-component polyurethane paints based on hydroxyl-containing acrylate, polyester or polyether resins and aliphatic or aromatic isocyanates, isocyanurates or polyisocyanates;
- One-component polyurethane paints based on blocked isocyanates, isocyanurates or polyisocyanates which are de-blocked during baking, if desired with addition of a melamine resin;
- One-component polyurethane paints based on a trisalkoxycarbonyl triazine cross linker and a hydroxyl group containing resin, such as acrylate, polyester or polyether resins;
- One-component polyurethane paints based on aliphatic or aromatic urethane acrylates or polyurethane acrylates having free amino groups within the urethane structure and melamine resins or polyether resins, if necessary with curing catalyst;
- Two-component paints based on (poly)ketimines and aliphatic or aromatic isocyanates, isocyanurates or polyisocyanates;
- Two-component paints based on (poly)ketimines and an unsaturated acrylate resin or a polyacetoacetate resin or a methacrylamidoglycolate methyl ester;
- Two-component paints based on carboxyl- or amino-containing polyacrylates and polyepoxides;
- Two-component paints based on acrylate resins containing anhydride groups and on a polyhydroxy or polyamino component;
- Two-component paints based on acrylate-containing anhydrides and polyepoxides;
- Two-component paints based on (poly) oxazolines and acrylate resins containing anhydride groups, or unsaturated acrylate resins, or aliphatic or aromatic isocyanates, isocyanurates or polyisocyanates;
- Two-component paints based on unsaturated polyacrylates and polymalonates;
- Thermoplastic polyacrylate paints based on thermoplastic acrylate resins or externally cross linking acrylate resins in combination with etherified melamine resins; and
- Paint systems based on siloxane-modified or fluorine-modified acrylate resins.

In addition to the components mentioned above, the coating composition according to the invention comprises an additional light stabiliser of the sterically hindered amine type, the 2-(2-hydroxyphenyl)-1,3,5-triazine and/or the 2-hydroxyphenyl-2H-benzotriazole types. Further examples for light stabilisers of the 2-(2-hydroxyphenyl)-1,3,5-triazine type advantageously to be added can be found e.g. in the published patent literature, e.g. US-A-4,619,956*,* EP-A-434 608*,* US-A-5, 198,4 98*,* US-A-5,322,868*,* US-A-5,369,140*,* US-A-5,298,067*,* WO-94/18278*,* EP-A-704 437*,* GB-A-2 297 091*,* WO-96/28431.

Apart from the components mentioned above, the coating composition can also comprise further components, examples being solvents, pigments, dyes, plasticisers, stabilisers, thixotropic agents, drying catalysts and/or levelling agents. Examples of possible components are those described in Ullmann's, Vol. A18, pp. 429-471*.*

Possible drying catalysts or curing catalysts are, for example, organometallic compounds, amines, amino-containing resins and/or phosphines. Examples of organometallic compounds are metal carboxylates, especially those of the metals Pb, Mn, Co, Zn, Zr or Cu, or metal chelates, especially those of the metals Al, Ti or Zr, or organometallic compounds, such as organotin compounds.

Examples of metal carboxylates are stearates of Pb, Mn or Zn, octanoates of Co, Zn or Cu, naphthenoates of Mn and Co or the corresponding linoleates, resinates or tallates.

Examples of metal chelates are aluminium, titanium or zirconium chelates of acetylacetone, ethyl acetylacetate, salicylaldehyde, salicylaldoxime, o-hydroxyacetophenone or ethyl tri-fluoroacetylacetate, and the alkoxides of these metals.

Examples of organotin compounds are dibutyltin oxide, dibutyltin dilaurate or dibutyltin dioctanoate.

Examples of amines are, in particular, tertiary amines, for example tri-n-butylamine, triethanolamine, N-methyldiethanolamine, N-dimethylethanolamine, N-ethylmorpholine, N-methylmorpholine or diazabicyclooctane (triethylenediamine) and salts thereof. Further examples are quaternary ammonium salts, for example trimethylbenzyl ammonium chloride. Amino-containing resins function simultaneously as binder and curing catalyst. Examples thereof are amino-containing acrylate copolymers.

The curing catalyst used can also be a phosphine, for example triphenylphosphine.

The novel coating compositions include radiation-curable coating compositions. In this case, the binder essentially comprises monomeric or oligomeric compounds containing ethylenically unsaturated bonds, which after application are cured by actinic radiation, i.e. converted into a crosslinked, high molecular weight form. Where the system is UV-curing, it generally contains a photoinitiator as well. Corresponding systems are described in the above-mentioned publication Ullmonn's, Vol. A18, pp. 451-453. In radiation-curable coating compositions, the novel stabilisers can also be employed without the addition of sterically hindered amines.

The coating compositions according to the invention can be applied to any desired substrates, for example to metal, wood, plastic or ceramic materials. They are preferably used as base coats in the finishing of automobiles. If the topcoat comprises two layers, of which the lower layer is pigmented and the upper layer is not pigmented, the novel compositions can be used preferably for the lower layer.

The novel coating compositions can be applied to the substrates by the customary methods, for example by brushing, spraying, pouring, dipping or electrophoresis; see also Ullmann's, Vol. A18, pp. 491-500.

Depending on the binder system, the coatings can be cured at room temperature or by heating. The coatings are preferably cured at 50 - 150°C, and in the case of powder coatings or coil coatings even at higher temperatures.

The coating compositions can comprise an organic solvent or solvent mixture in which the binder is soluble. The coating composition can otherwise be an aqueous solution or dispersion. The vehicle can also be a mixture of organic solvent and water. The coating composition may be high-solids paint or can be solvent-free (e.g. a powder coating material). Powder coatings are, for example, those described in Ullmann's, A18, pp. 438-444. The powder coating material may also have the form of a powder-slurry (dispersion of the powder preferably In water).

The above-mentioned coating compositions or disperse systems may additionally contain further additives, such as calcium carbonate, clays, bentonites, silicates, glass fibres, glass beads, talc, kaolin, mica, barium sulphate, metal oxides and hydroxides, carbon black, graphite, wood powders, powders and fibres of other natural products, synthetic fibres, plasticisers, lubricants, emulsifiers, pigments, rheology additives, catalysts, flow auxiliaries, optical brighteners, flame retardants, or antistatic or blowing agents.

**The following examples illustrate the invention:**
¹H-NMR spectra: 400 MHz in CDCl₃; DOWANOL: Dowanol®

### Abbreviations

¹H-NMR spectra: 400 MHz in CDCl₃;
DOWANOL: Dowanol®-PM = 1-Methoxy-2-propanol
Amberlist: Amberlist®15 cationic ion ex-change resin (CAS: 9037-24-5)

### Abbreviations

GPC: Gel Permeation Chromatography; Columns: Polymer Laboratories: PL-Gel 5 u (300X75mm), THF (solvent), Polystyrene-Standard, Refractive Index-Detector Mn= Number Average Molecular Weight: Mn= (nᵢ . mᵢ) / nᵢ; Definition see also *J.M.G. Cowie*
*"*Chemie und Physik der Polymeren"pg 7-9 (Verlag Chemie Weinheim - New York 1976; ISBN 3-527-25666-0*)*
D= P_{υ}: Polydispersity index = Mw/Mn; Mw= (nᵢ . mᵢ²)/(nᵢ . m) Definition see also J.M.G. Cowie "Chemie und Physik der Polymeren*"* loc. cit.
D_{P} = degree of polymerisation: D_{P}=Pₙ Mₙ/M_{Molkatner}=number of monomer units incorporated into polymer chain. Definition see also J.M.G. Cowie "Chemie und Physik der Polymeren" loc. cit.
PMDETA: Pentamethyldiethylenetriamine
RT: room temperature
BMA: methacrylic acid n-butyl ester
BA: n-butyl acrylate
DMAEA: 2-dimethylaminoethylacrylate
mp: melting point
U.S.: U.S. Patent Specification

### Example 15

### 15.1

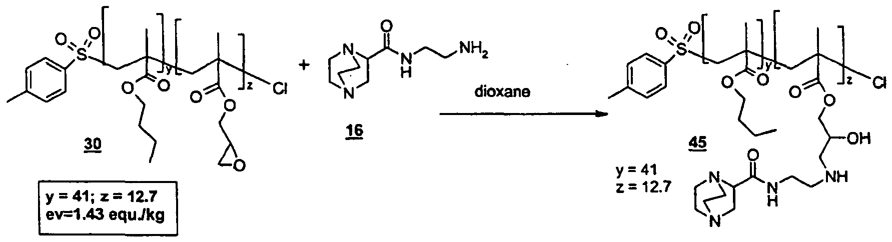

2.825 g (14.3 mmol) 1**6** is dissolved in 50 ml dioxane and heated up to a reaction temperature of 90°C. 10.08 g (14.3 mmol) **30** dissolved in 10 ml dioxane is added slowly over a time period of 1 h. The epoxy value of the reaction mixture is monitored until it approaches zero. The green coloured solution is diluted with additional 50 ml dioxane. 12.0 g Al₂O₃ is added, and the product mixture is stirred for 1 h at RT. The blue coloured Al₂O₃ is filtered off and the product solution becomes colourless. The procedure is repeated to eliminate all Cu-II-traces left in the reaction mixture. After distilling off the dioxane the functionalised AB-diblock-copolymer **45** is obtained as a slightly orange coloured solid resin.

GPC: Mn: 5600 g/mol, D: 1.3; ¹H-NMR: Dp(BA): 41, Dp (16): 12.7.

### 15.2 Preparation of starting material

### 15.2.1

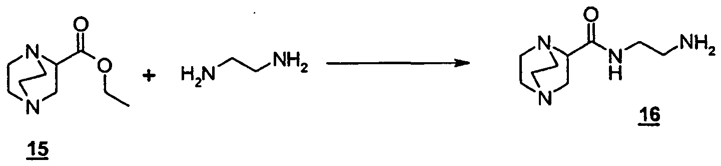

22.0 g (0.12 mol) **15** (dissolved in 5 ml toluene) are slowly added to a solution of 200 ml ethylene diamine at RT over a time period of 2 h. The clear solution obtained is heated up to a reaction temperature of 50°C and stirred for 24 h. The large excess of ethylene diamine is distilled off at a reaction temperature of 40-50°C at reduced pressure. The product **16** is obtained as colourless oil.

¹H-NMR (Bruker 400MHz, CDCl₃, δ (ppm)): 7.38-7.32 (s, broad), 1 H (NHCO); 3.35 (t), 1 H (CH-DABCO-H); 3.3-3.0 (2m), 3.46-2.63 (2m), 14H (DABCO ring moiety-H (10H)+, α-methylene-H, amidoamine 4H); 1.49 (s, broad), 2H (NH₂); GC-MS: MH+: 199.

### 15.2.2

The starting material **15** is prepared according to the method as described in U.S. 6,057,321*.*

### Example 16

### 16.1

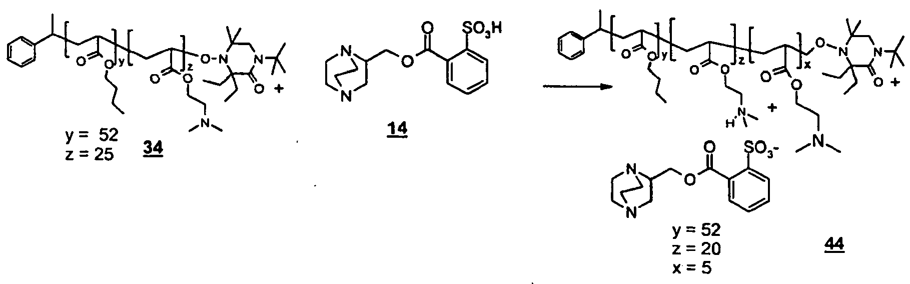

3.02 g (9.26 mmol) **14** is added to a mixture of 15 ml DOWANOL and 15 ml water. The solution is heated to a reaction temperature of 90°C until **14** is fully dissolved. 5.0 g (0.46 mmol) polymeric dispersant **34** is dissolved in 6.5 ml DOWANOL and added over a time period of 40 min. to the reaction mixture, which is maintained at a reaction temperature of 90°C until all of **14** have reacted with polymer **34**. After 3 h reaction time the functionalised pigment dispersant **44** is obtained as a colourless solution. After distilling off the solvents **44** is obtained as a colourless solid resin.

GPC: Mn: 6600 g/mol, D: 1.44; ¹H-NMR: Dp (BA): 52, Dp (DMAEA-LS): 20.

### 16.2 Preparation of starting material

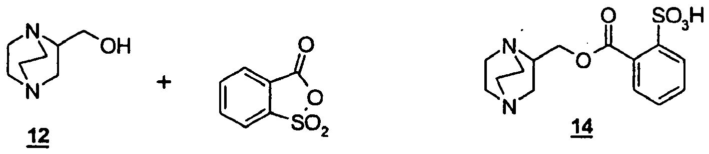

4.6 g (0.032 mol) **12** and 5.41 g (0.03 mol) 2-sulphobenzoic acid anhydride are suspended in 30 ml dioxane and heated up to a reflux temperature of 95°C. After a total reaction time of 2.5 h the reaction mixture is cooled to RT. The product is isolated by filtration, dissolved in H₂O/EtOH and eluted over an ion exchange resin (AMBERLIST 15). The sulphonic acid is washed from the column with a triethylamine/ethanol (1:3) mixture, and the beige coloured solid is recrystallised from H₂O/THF (1:1). Product **14** is isolated as colourless crystals, mp: 310°C (decomp.).

¹H-NMR (Bruker 400MHz, DMSO, δ (ppm)): 10.28 (s, broad), 1 H (SO₃H); 8.06, 8,04(d), 1 H (aromatic-H); 7.8-7.69 (m+d), 4H (aromatic region-H); 4,73, 4.71 (d), 2H (α-methylene-ester-H); 3.99 (m), 1 H (CH-DABCO); 3.62-3.14 (m), 10H (DABCO-ring moiety-H).

LC-MS (0.17% in H₂O, UV-Detector, 254nm): t(ret): 4.36 min: M+: 326.

### Example 17

### 17.1

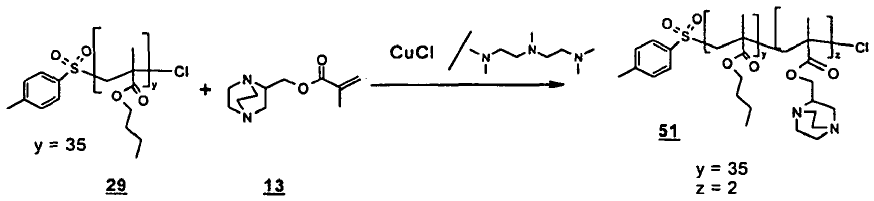

10.0 g (1.95 mmol) **29** and 3.07 g (14.6 mmol) **13** are dissolved in 10 ml DMF. 198.0 mg (2 mmol) CuCl is added to this mixture, and the suspension is stirred at RT. 0.43 g (2.5 mmol) PMDETA is added to the slightly green coloured suspension. The green suspension turns to a dark green solution, which is slowly heated to a reaction temperature of 90°C and maintained at this temperature over night (15 h). The dark green coloured viscous solution is cooled to RT and diluted with 100 ml dioxane. 10 g Al₂O₃is added to the green coloured solution, and the product mixture is stirred for 1 h at RT. The blue coloured Al₂O₃ is filtered off, and the product solution becomes slightly yellow coloured. The procedure is repeated to eliminate all Cu-II-traces left in the reaction mixture. After distilling off the excess amount of **13** and DMF, the functionalised AB-diblock-copolymer **51** is obtained as a brown coloured resin.

GPC: Mn: 7000 g/mol, D: 1.35; ¹H-NMR: Dp(BA): 35, Dp (13): 2.

### 17.2 Preparation of starting material

### 17.2.1

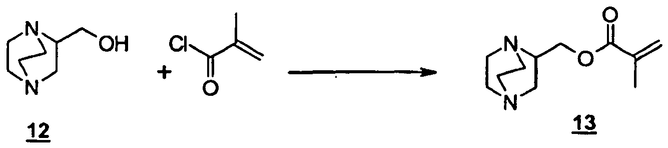

6.9 g (0.048 mol) **12** is dissolved in 50 ml THF and heated to a reaction temperature of 50°C. To the clear solution 24 g triethylamine is added and 6.1 g (0.058 mol) methacrylic acid chloride over a time period of 30 min. The reaction mixture is maintained for 4.5 h at a reaction temperature of 50°C and then cooled to RT. The reaction mixture is filtered off from the un-dissolved ammonium salt. The solvent is stripped off from the remaining clear solution. The oily residue is distilled over a short Vigreux column at a reduced pressure and a temperature of 120°C. The product **13** is distilled of at the column temperature of 99-100°C and obtained as colourless oil.

¹H-NMR (Bruker 400MHz, CDCl₃, δ (ppm)): 6.17 (s), 5.63(s), 2H (olefin-acrylate-H); 4.35 (dd), 4.15 (dd), 2H (α-methylene-acrylate-H); 3.15-2.3 (m): 10H: DABCO-ring moiety-H); 1.95 (s): 3H:CH3-methyl-acrylate-H).

### 17.2.2

The starting material **12** is prepared according to the method as described in U.S. 6,057,321.

### Example 22

0.1 % CIBA IRGALITH® YELLOW BAW (C.I. Pigment Yellow 13);
0.1 % CIBA PIGMENT ORANGE® 16A (C.I. Pigment Orange 73);
0.1% CIBA CROMOPHTAL® RED BRN (C.I. Pigment Red 144);
0.1% CIBA CROMOPHTAL® DPP RED BP (C.I. Pigment Red 254);
0.1% CIBA CROMOPHTAL®DPP FIAME RED FP (C.I. Pigment Red 272);
are each dispersed with 0.02% functionalised dispersant (20% on pigment); on HDPE (mass); 1000 g HDPE (unstabilised); Extrusion in a double screw extruder at 220°C.
Results (HDPE, 0.1% Pi (full colour shade))

| Full Colour Shade (220°C) | L* | C* | H | DL* | DC* | DH* | DE* |
|---|---|---|---|---|---|---|---|
| No Additive | 83.2 | 89.5 | 87.3 | Standard C.I. PY 13 | | | |
| 39 | 83.4 | 88.0 | 90.2 | 0.2 | -1.5 | 4.6 G | 4.8 |
| 55 | 83.7 | 88.3 | 90.0 | 0.5 | -1.2 | 4.1 G | 4.4 |
| 59 | 83.5 | 88.8 | 89.9 | 0.3 | -0.7 | 4.1 G | 4.1 |
| No Additive | 65.5 | 69.0 | 44.6 | Standard C.I. PO 73 | | | |
| 52 | 64.0 | 73.6 | 45.9 | -1.4 | 4.6 | 1.7 Y | 5.1 |
| 55 | 63.9 | 73.6 | 45.8 | -1.6 | 4.6 | 1.5 Y | 5.1 |
| 59 | 64.0 | 73.8 | 45.8 | -1.5 | 4.8 | 1.5 Y | 5.3 |
| No Additive | 49.5 | 59.6 | 29.0 | Standard C.I. PR 144 | | | |
| 52 | 48.8 | 59.2 | 29.3 | -0.7 | -0.4 | 0.3 Y | 0.8 |
| No Additive | 50.3 | 68.3 | 31.5 | Standard C.I. PR 254 | | | |
| 50 | 50.3 | 68.2 | 31.2 | 0.0 | -0.1 | 0.4 B | 0.4 |
| 40 | 50.3 | 668.0 | 31.2 | 0.1 | -0.3 | 0.4 B | 0.5 |
| 45 | 50.3 | 68.2 | 31.4 | 0.0 | -0.1 | 0.2 B | 0.3 |
| No Additive | 51.8 | 70.2 | 33.7 | Standard C.I. PR 272 | | | |
| 40 | 51.8 | 69.4 | 33.5 | 0.1 | -0.8 | 0.3 B | 0.8 |
| 38 | 51.9 | 69.5 | 33.7 | 0.2 | -0.7 | 0.0 | 0.7 |

Physical mixture: Physical blend of the pigment dispersant and pigment which is extruded into HDPE at a temperature of 220°C.

### Light stability determined by CAM 119 - 1000 hours WOM, Gray Scale:

| | No Additive | 38 | 39 | 40 | 45 | 50 | 52 | 55 | 59 |
|---|---|---|---|---|---|---|---|---|---|
| 0.1 % PY 13 | 1 | - | 2 | - | - | - | - | 2.5 | 3 |
| 0.1% PO 73 | 1.5 | - | - | - | - | - | 3.5 | 3 | 3 |
| 0.1% PR 144 | 2 | - | - | 2.5 | - | - | - | - | - |
| 0.1% PR 254 | 3 | - | - | 3.5 | 3.5 | 4 | - | - | - |
| 0.1% PR 272 | 2 | 2.5 | - | 2.5 | - | - | - | - | - |

CAM-119-Cycle: "CIBA internal WOM-Norm": Xe 6500W, Boro-S-/Boro-S-filter combination,
irradiance: 0.35W/m²/340nm, Cycle is 40 min dark, 20 min light and rain, 160min light, 20min light and rain;
Gray Scale: DIN EN 20105-A02

## Claims

1. A polymerisate of the formula: 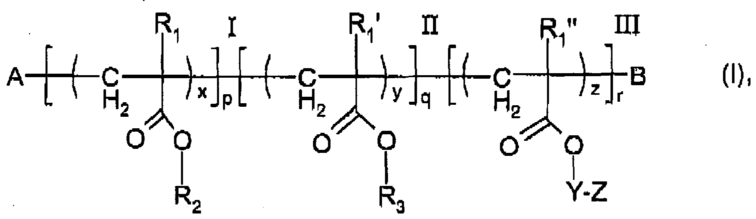 Wherein
A and B represent polymer chain terminal groups,;
R₁, R₁' and R₁" independently of one another represent hydrogen or C₁-C₄alkyl;
R₂ represents hydrogen or an ester group of higher polarity;
R₃ represents an ester group of lower polarity;
Y represents the direct pond or a bivalent group or Y represents a substituent that contains a functional group, which forms a salt with a salt forming group present in the group Z by acid-base reaction, acid addition or quaternisation reaction;
Z represents the functionally effective group of the formula D or E 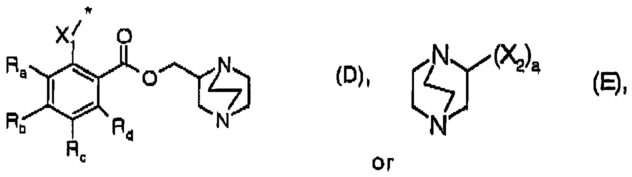 wherein Rₐ, R_{b}, R_{c} and R_{d} independently of one another represent hydrogen, halogen, C₁-C₄alkyl or C₁-C₄alkoxy,
X1 is a salt forming group selected from carboxy, sulpho or phosphono; and
X2 represents a bivalent functional group selected from -C(=O)-O-, - C(=O)-NH-, -CH₂-O-, -O-, -NH- or -N(C₁-C₄alkyl)-, which is attached to Y;
the index a represents one or zero (= direct bond),
The numerals I, II, III represent individual polymer blocks in any sequential order;
The indices p, q and r represent the number of polymer blocks I, II and III in the polymerisate, wherein one of the indices p and q independently of one another represents zero, one or a numeral greater than one and the other one represents one or a numeral greater than one; and r represents one or a numeral greater than one; and wherein
The indices x, y and z define the number of monomer units present in the Individual polymer blocks I, II and III.

2. A polymerisate according to claim 1 of the formula: 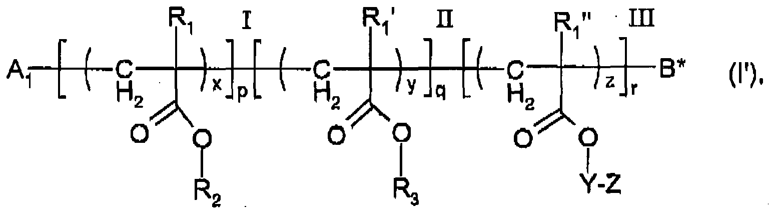 Wherein
A₁ represents the fragment of a polymerisation Initiator;
B* represents a ∩olymerizable, ethylenically unsaturated terminal group; and
R₁, R₁', R₁", R₂, R₃ Y, Z, the numerals I, II and III and the indices p, q, r, x, y and z are as defined in claim 1.

3. A comb polymer according to claim 1 of the formula: 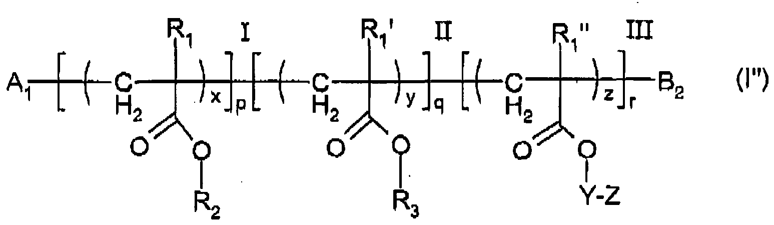 Wherein
A₁ represents the fragment of a polymerisation initiator;
R₁, R₁', R₁", R₂, R₃ Y, Z, the numerals I, II and III and the indices p, q, r, x, y and z are as defined in claim 1; and
B₂ represents a polymer group of the partial formula: 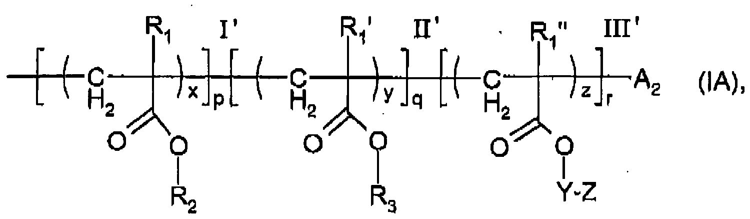 Wherein
A₂ represents a polymer chain terminal group;
R₁, R₁', A₁", R₂, R₃ Y and Z are as defined in claim 1;
The numerals I, II and III represent individual polymer blocks in any sequential order; The indices p, q and r represent the number of polymer blocks I, II and III in the polymerisate, wherein
One of the indices p, q and r independently of one another represents one or a numeral greater than one;
And the other ones represent zero, one or a numeral greater than one; and The indices x, y and z define the number of monomer units present in the individual polymer blocks I, II and III.

4. A polymerisate (I) according to claim 1, wherein
A and B represent polymer chain terminal groups;
R₁, R₁' and R₁" independently of one another represent hydrogen or methyl;
R₂ represents an ester group selected from the group consisting of mono- or dihydroxy-C₂-C₄-alkyl, amino-C₂-C₁₈alkyl, ammonio-C₂-C₁₈alkyl, C₁-C₄alkylamino-C₂-C₁₈alkyl, di-C₁C₄alkylamino-C₂-C₁₈alkyl, tri-C₁-C₄alkylammono-C₂-C₁₈alkyl, hydroxy-C₂-C₄alkylamino-C₂-C₁₈alkyl, C₁-C₄alkyl-(hydroxy-C₂-C₄alkyl) amino-C₂-C₁₆alkyl, di-C₁-C₄alkyl-(hydroxy-C₂-C₄alkyl)ammonio-C₂-C₄alkyl, and C₁-C₄alkyl substituted by carboxy, sulpho or phosphono.
R₃ represents G₁-G₈alkyl, e.g. methyl, ethyl, isopropyl, n-butyl or 2-ethylhexyl;
Y and Z are as defined In claim 1;
The indices p and x represent zero;
And the numerals II and III and the Indices q, r, y and z are as defined in claim 1,

5. A polymerisate (I) according to claim 1, wherein
A and B represent polymer chain terminal groups:
R₁, R₁' and R₁" independently of one another represent hydrogen or methyl;
R₂ represents an ester group selected from the group consisting of C₂₋C₄alkyl substituted by amino, ammonio, C₁-C₄alkylamino, di-C₁-C₄alkylamino, tri-C₁-C₄alkylammonio, or di-C₁-C₄alkyl-2-hydroxyethylammonio;
R₃ represents C₁-C₈alkyl;
Y and Z are as defined in claim 1;
The indices p and x represent zero;
The indices q and r represent one;
The indices y and z represent numerals greater than one;
And the numerals II and III are as defined in claim 1.

6. A compound of the formula: 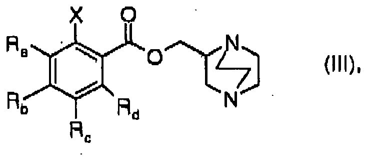 Wherein
X represents corboxy, sulpho or phosphono; and
Rₐ, R_{b}, R_{c} and R_{d} independently of one another represent hydrogen, halogen, C₁-C₄alkyl or C₁-C₄alKoxy.

7. A compound of the formula; 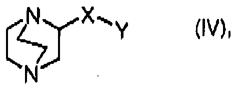 Wherein
X represents a bivalent functional group selected from the group consisting of -C(=O)-NH-, -CH₂-O-, -O-, -NH- and -N(C₁-C₄alkyl)-; and
Y represents C₁-C₄alkyl, hyqroxy-C₂-C₄alkyl, amino-C₂-C₄alkyl, acryloyl or methacryloyl.

8. A composition comprising
a) A composition of matter susceptible to degradation induced by light, heat or oxidation; and
b) The polymerisate (I), wherein A, B, R₁, R₁', R₁", R₂, R₃, Y, Z; the numerals I, II and III and the indices p, q, r, x, y and z are as defined in claim 1.

9. A pigment composition comprising
a') 0.1-99.9% by weight dispersible organic or inorganic pigment particles; and
b') 0.1-99,9% by weight of a polymerisate (I), wherein A, B, R1, R1'. R₂", R_{2,} R_{3,} Y, Z, the numerals I, II and III and the indices p, q, r, x, y and z are as defined in claim 1,

10. A composition according to claim 9 , which additionally contains additives selected from the group consisting of surfactants, light stabilisers, UV-absorbers, anti-foaming agents, dispersion stabilisers, dyes, plasticisers, thixotropic agents, drying catalysts, anti-skinning agents and levelling agents,

11. A pigment dispersion comprising
a") Dispersed organic or inorganic pigment particles: and
b") A dispersing agent consisting of at least one polymerisate (I), wherein A, B, R₁, R₁', R₁", R₂, R₃, Y, Z, the numerals I, II and III and the indices p, q, r, x, y and z are as defined in claim 1;
And a carrier liquid comprising water, organic solvents and mixtures thereof.

12. Use of the pigment dispersion according to claim 11 for preparing ink compositions or colour filters.

13. Use of the pigment dispersion according to claim 11 for preparing coating compositions, prints, images, inks, lacquers, pigmented plastics, adhesives, casting resins, filled composites, glass fibre reinforced composites, laminates, cement based construction materials like plaster and tile adhesives.

## Patentansprüche

1. Polymerisat der Formel: 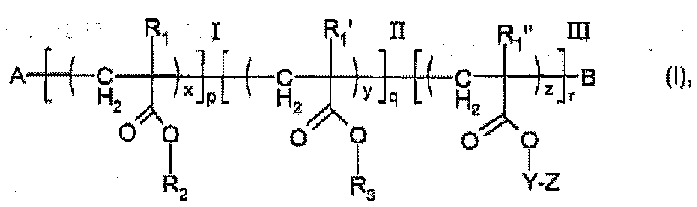 worin
A und B für Polymerkettenendgruppen stehen;
R₁, R₁' und R₁' ' unabhängig voneinander für Wasserstoff oder C₁-C₄-Alkyl stehen;
R₂ für Wasserstoff oder eine Estergruppe höherer Polarität steht;
R₃ für eine Estergruppe niedrigerer Polarität steht;
Y für die direkte Bindung oder eine zweiwertige Gruppe steht oder Y für einen Substituenten steht, der eine funktionelle Gruppe, enthält, die mit einer in der Gruppe Z vorliegenden salzbildenden Gruppe durch Säure-Base-Reaktion, Säureaddition oder Quaternisierungsreaktion ein Salz bildet;
Z für die funktionell wirksame Gruppe der Formel D oder E 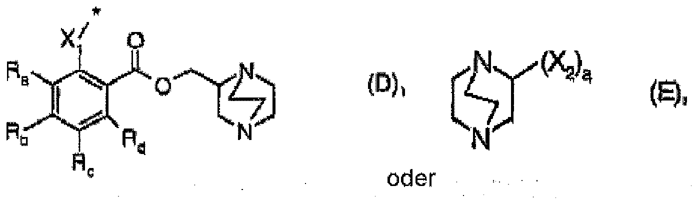 steht,
worin Rₐ, R_{b}, Rₑ und R_{d} unabhängig voneinander für Wasserstoff, Halogen, C₁-C₄-Alkyl oder C₁-C₄-Alkoxy stehen,
X1 für eine unter Carboxy, Sulfo oder Phosphono ausgewählte salzbildende Gruppe steht und X2 für eine unter -C(=O)-O-, -C(=O)-NH-, -CH₂-O-, -O-, -NH- oder -N(C₁-C₄-Alkyl)- ausgewählte zweiwertige funktionelle Gruppe steht, die an Y gebunden ist;
der Index a für eins oder null ( = direkte Bindung) steht,
die Ziffern I, II und III für individuelle Polymerblöcke in beliebiger Reihenfolge stehen; die Indices p, q und r für die Zahl der Polymerblöcke I, II und III in dem Polymerisat stehen, wobei einer der Indices p und q unabhängig voneinander für null, eins oder eine Ziffer mit einem Wert von mehr als eins steht und der andere für eins oder eine Ziffer mit einem Wert von mehr als eins steht und r für eins oder eine Ziffer mit einem Wert von mehr als eins steht; und wobei die Indices x, y und z die Zahl der in den individuellen Polymerblöcke I, II und III vorliegenden Monomereinheiten definieren.

2. Polymerisat nach Anspruch 1 der Formel: 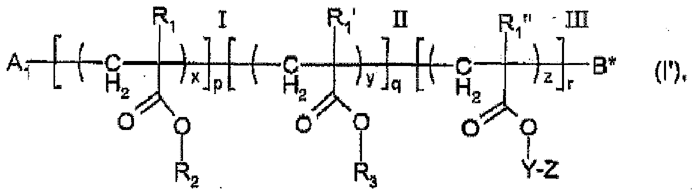 worin
A₁ für das Fragment eines Polymerisationsinitiators steht;
B* für eine polymerisierbare, ethylenisch ungesättigte Endgruppe steht und
R₁, R₁', R₁", R₂, R₃, Y, Z, die Ziffern I, II und III und die Indices p, q, r, x, y und z wie in Anspruch 1 definiert sind.

3. Kammpolymer nach Anspruch 1 der Formen: 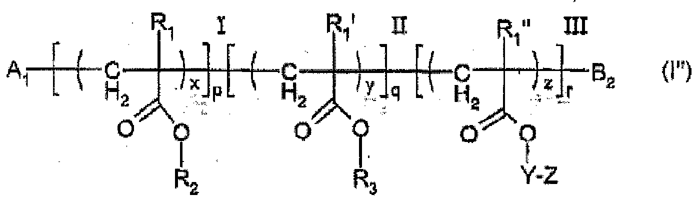 worin
A₁ für das Fragment eines Polymerisationsinitiators steht;
R₁, R₁', R₁'', R₂, R₃, Y, Z, die Ziffern I, II und III und die Indices p, q, r, x, y und z wie in Anspruch 1 definiert sind und
B₂ für eine Polymergruppe der Teilformel: 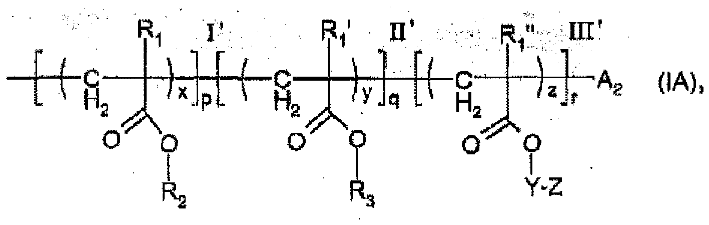 steht, worin A₂ für eine Polymerkettenendgruppe steht;
R₁, R1', R₁'', R₂, R₃, Y und Z wie in Anspruch 1 definiert sind;
die Ziffern I, II und III für individuelle Polymerblöcke in beliebiger Reihenfolge stehen; die Indizes p, q und r für die Zahl der Polymerblöcke I, II und III in dem Polymerisat stehen, wobei
einer der Indices p, q und r unabhängig voneinander für eins oder eine Ziffer mit einem Wert von mehr als eins steht
und die anderen für null, eins oder eine Ziffer mit einem Wert von mehrmals eins stehen; und die Indices x, y und z die Zahl der in den individuellen Polymerblöcke I, II und III vorliegenden Monomereinheiten definieren.

4. Polymerisat (I) nach Anspruch 1, worin
A und B für Polymerkettenendgruppen stehen;
R₁, R₁' und R₁'' unabhängig voneinander für Wasserstoff oder Methyl stehen;
R₂ für eine Estergruppe aus der Gruppe bestehend aus Mono- oder Dihydroxy-C₂-C₄-alkyl, Amino-C₂-C₁₈-alkyl, Ammonio-C₂-C₁₈-alkyl, C₁-C₄-Alkylamino-C₂-C₁₈-alkyl, Di-C₁-C₄-alkylamino-C₂-C₁₈-alkyl, Tri-C₁-C₄-alkylammonio-C₂-C₁₈-alkyl, Hydroxy-C₂-C₄-alkylamino-C₂-C₁₈-alkyl, C₁-C₉-Alkyl (hydroxy-C₂-C₄-alkyl) amino-C₂-C₁₈-alkyl, Di-C₁-C₉-alkyl (hydroxy-C₂-C₉-alkyl)-ammonio-C₂-C₁₈₋alkyl und durch Carboxy, Sulfo oder Phosphono substituiertem C₁-C₄-Alkyl steht;
R₃ für C₁-C₈-Alkyl, z.B. Methyl, Ethyl, Isopropyl, n-Butyl oder 2-Ethylhexyl, steht;
Y und Z wie in Anspruch 1 definiert sind;
die Indizes p und x für null stehen und die Ziffern II und III und die Indices q, r, y und z wie in Anspruch 1 definiert sind.

5. Polymerisat (I) nach Anspruch 1, worin
A und B für Polymerkettenendgruppen stehen;
R₁, R₁' und R₁'' unabhängig voneinander für Wasserstoff oder Methyl stehen;
R₂ für eine Estergruppe aus der Gruppe bestehend aus durch Amino, Ammonio, C₁-C₄-Alkylamino, Di-C₁-C₄-alkylamino, Tri-C₁-C₄-alkylaznmonio oder Di-C₁-C₄-alkyl-2-hydroxyethylammonio substituiertem C₁-C₄-Alkyl steht;
R₃ für C₁-C₈-Alkyl steht;
Y und Z wie in Anspruch 1 definiert sind;
die Indices p und x für null stehen;
die Indices q und r für eins stehen;
die Indizes y und z für Ziffern mit einem Wert von mehr als eins stehen
und die Ziffern II und III und wie in Anspruch 1 definiert sind.

6. Vebindung der Formel: 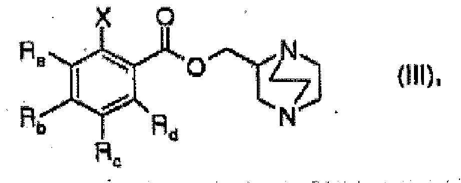 worin
X für Carboxy, Sulfo oder Phosphono steht und
Rₐ, R_{b}, R_{c} und B_{d} unabhängig voneinander für Wasserstoff, Halogen, C₁-C₄-Alkyl oder C₁-C₄-Alkoxy stehen.

7. Verbindung der Formel: 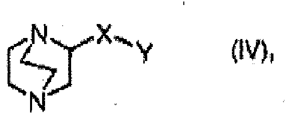 worin
X für eine unter -C(=O)-NH, -CH₂-O-, -O-, -NH- und -N(C₁-C₉-Alkyl)- ausgewählte zweiwertige Gruppe steht und
Y für C₁-C₉-Alkyl, Hydroxy-C₂-C₄-alkyl, Amino-C₂-C₄-alkyl, Acryloyl oder Methacryloyl steht.

8. Zusammensetzung, umfassend
a) eine Stoffzusammensetzung, die gegenüber durch Licht, Wärme oder Oxidation induziertem Abbau empfindlich ist; und
b) das Polymerisat (I), wobei A, B, R₁, R₁', R₁'', R₂, R₃, Y, Z, die Ziffern I, II und III und die Indices p, q, r, x, y und z wie in Anspruch 1 definiert sind.

9. Pigmentzusammensetzung, umfassend
a') 0,1-99,9 Gew.-% dispergierbare organische oder anorganische Pigmentteilchen und
b') 0, 1-99, 9 Gew.-% eines Polymerisats (I), wobei A, B, R₁, R₁', R₁'', R₂, R₃, Y, Z, die Ziffern I, II und III und die Indices p, q, r, x, y und z wie in Anspruch 1 definiert sind.

10. Zusammensetzung nach Anspruch 9, die zusätzliche Additive aus der Gruppe bestehend aus Tensiden, Lichtschutzmitteln, UV-Absorbern, Antischaummitteln, Dispersionsstabilisatoren, Farbstoffen, Weichmachern, Thixotropiermitteln, Trocknungskatalysatoren, Hautverhütungsmitteln und Verlaufsmitteln enthalt.

11. Pigmentdispersion, umfassend
a'') dispergierte organische oder anorganische Pigmentteilchen und
b'') ein Dispergiermittel, bestehend aus mindestens einem Polymerisat (I), wobei A, B, R₁, R₁', R₁'', R₂, R₃, Y, Z, die Ziffern I, II und III und die Indizes p, q, r, x, y und z wie in Anspruch 1 definiert sind;
und eine Trägerflüssigkeit, die Wasser, organische Lösungsmittel und Mischungen davon umfasst.

12. Verwendung der Pigmentdispersion gemäß Anspruch 11 zur Herstellung von Tintenzusammensetzungen oder Farbfiltern.

13. Verwendung der Pigmentdispersion gemäß Anspruch 11 zur Herstellung von Beschichtungszusammensetzungen, Drucken, Bildern, Tinten, Lacken, pigmentierten Kunststoffen, Klebstoffen, Gießharzen, gefüllten Verbundwerkstoffen, glasfaserverstärkten Verbundwerkstoffen, Laminaten, auf Zement basierenden Baustoffen wie Putz und Fliesenklebern.

## Revendications

1. Polymérisat de formule : 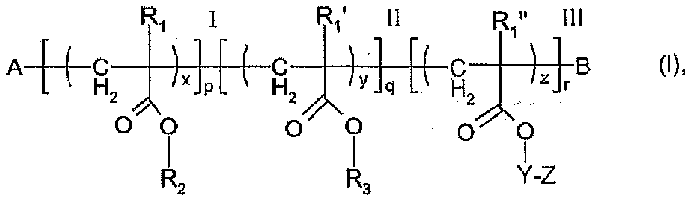 dans laquelle
A et B représentent des groupements terminaux de chaîne polymère ;
R₁, R_{1'} et R_{1"} représentent, indépendamment les uns des autres, hydrogène ou C₁-C₄alkyle ;
R₂ représente hydrogène ou un groupement ester de polarité supérieure ;
R₃ représente un groupement ester de polarité inférieure ;
Y représente une liaison directe ou un groupement bivalent, ou Y représente un substituant qui contient un groupement fonctionnel, qui forme un sel avec un groupement formateur de sel présent dans le groupement Z par une réaction acide-base, une addition d'acide ou une réaction de quaternisation ;
Z représente un groupement fonctionnellement efficace de formule D ou E 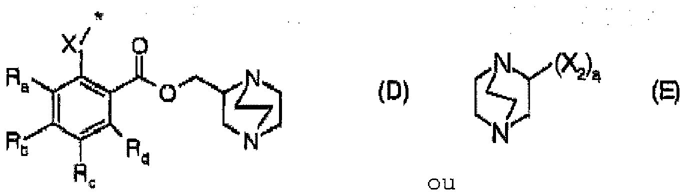 dans lesquelles Rₐ, R_{b}, R_{c} et R_{d} représentent, indépendamment les uns des autres, hydrogène, halogène, C₁-C₄alkyle ou C₁-C₄alcoxy ;
X₁ est un groupement formateur de sel choisi parmi carboxy, sulfo ou phosphono ; et
X₂ représente un groupement fonctionnel bivalent choisi parmi -C(=O)-O-, -C(-O)-NH-, -CH₂-O-, -O-, -NH- ou -N(C₁-C₄alkyl)-; qui est fixé à Y ;
l'indice a représente un ou zéro (= liaison directe) ; les chiffres I, II, III représentent des blocs de polymère individuels selon un ordre séquentiel quelconque ;
les indices p, q et r représentent le nombre de blocs de polymère I, II et III dans le polymérisat, où l'un des indices p et q représente, indépendamment l'un de l'autre, zéro, un ou un chiffre supérieur à un et l'autre représente un ou un chiffre supérieur à un ; et r représente un ou un chiffre supérieur à un ; et où les indices x, y et z définissent le nombre de motifs monomères présents dans les blocs de polymère individuels I, II et III.

2. Polymérisat selon la revendication 1 de formule : 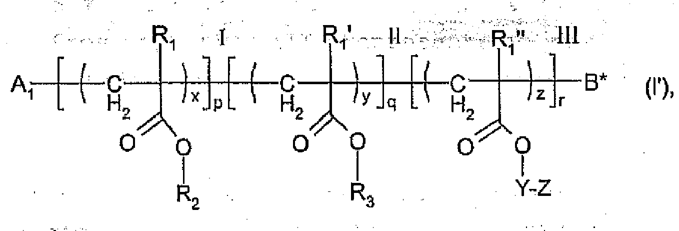 dans laquelle
A₁ représente le fragment d'un initiateur de polymérisation ;
B* représente un groupement terminal éthyléniquement insaturé et polymérisable ; et
R₁, R_{1'}, R_{1''}, R₂, R₃, Y, Z, les chiffres I, II et III et les indices p, q, r, x, y et z sont tels que définis selon la revendication 1.

3. Polymère à structure en peigne selon la revendication 1 de formule : 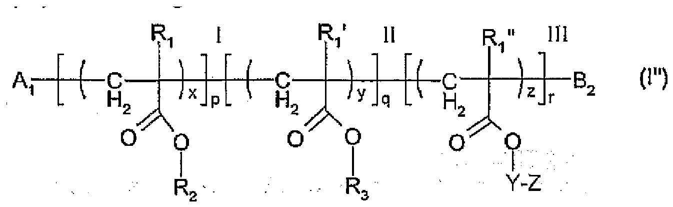 dans laquelle
A₁ représente le fragment d'un initiateur de polymérisation ;
R₁, R_{1'}, R_{1''}, R₂, R₃, Y, Z, les chiffres I, II et III et les indices p, q, r, x, y et z sont tels que définis selon la revendication 1 ; et
B₂ représente un groupement polymère de formule partielle : 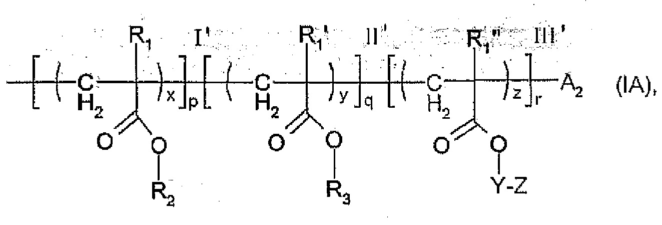 dans laquelle
A₂ représente un groupement terminal de chaîne polymère ;
R₁, R_{1'}, R_{1''}, R₂, R₃, Y et Z sont tels que définis selon la revendication 1 ;
les chiffres I, II et III représentent des blocs de polymère individuels selon un ordré séquentiel quelconque ;
les indices p, q et r représentent le nombre de blocs de polymère I, II et III dans le polymérisat, où l'un des indices p, q et r représente, indépendamment les uns des autres, un ou un chiffre supérieur à un ; et les autres représentent zéro, un ou un chiffre supérieur à un ; et les indices x, y et z définissent le nombre de motifs monomères présents dans les blocs de polymère individuels I, II et III.

4. Polymérisat (I) selon la revendication 1, dans lequel
A et B représentent des groupements terminaux de chaîne polymère ;
R₁, R₁, et R_{1''} représentent, indépendamment les uns des autres, hydrogène ou méthyle ;
R₂ représente un groupement ester choisi dans le groupe constitué par mono- ou dihydroxy-C₂-C₄alkyle, amino-C₂-C₁₈alkyle, ammonio-C₂-C₁₈alkyle, C₁-C₄alkylamino-C₂-C₁₈-alkyle, di-C₁-C₄alkylamino-C₂-C₁₈alkyle, tri-C₁-C₄-alkylammonio-C₂-C₁₈alkyle, hydroxy-C₂-C₄alkylamino-C₂-C₄-alkyle, C₁-C₄alkyl (hydroxy-C₂-C₄alkyl) amino-C₂-C₁₈-alkyle, di-C₁-C₄alkyl (hydroxy-C₂-C₄alkyl) ammonio-C₂-C₁₈-alkyle, et C₁-C₄alkyle substitué par carboxy, sulfo ou phosphono ;
R₃ représente C₁-C₈alkyle, par exemple méthyle, éthyle, isopropyle, n-butyle ou 2-éthylhexyle ;
Y et Z sont tels que définis selon la revendication 1 ; les indices p et x représentent zéro ; et
les chiffres II et III et les indices q, r, y et z sont tels que définis selon la revendication 1.

5. Polymérisat (I) selon la revendication 1, dans lequel
A et B représentent des groupements terminaux de chaîne polymère;
R₁, R_{1'} et R_{1''} représentent, indépendamment les uns des autres, hydrogène ou méthyle ;
R₂ représente un groupement ester choisi dans le groupe constitué par C₂-C₄alkyle substitué par amino, ammonio, C₁-C₄alkylamino, di-C₁-C₉alkylamino, tri-C₁-C₄alkyl-ammonio, ou di-C₁-C₄alkyl-2-hydroxyéthylammonio ;
R₃ représente C₁-C₈alkyle ;
Y et Z sont tels que définis selon la revendication 1 ; les indices p et x représentent zéro ;
les indices q et r représentent un ;
les indices y et z représentent des chiffres supérieurs à un ; et
les chiffres II et III sont tels que définis selon la revendication 1.

6. Composé de formule : 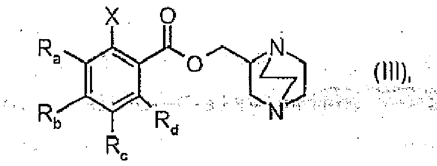 dans laquelle
X représente carboxy, sulfo ou phosphono ; et
Rₐ, R_{b}, R_{c} et R_{d} représentent, indépendamment les uns des autres, hydrogène, halogène, C₁-C₄alkyle ou C₁-C₄alkoxy.

7. Composé de formule : 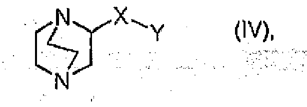 dans laquelle
X représente un groupement fonctionnel bivalent choisi dans le groupe constitué par -C(=O)-NH-, -CH₂-O-, -O-, -NH- et -N (C₁-C₄alkyl) - ; et
Y représente C₁-C₄alkyle, hydroxy-C₂-C₄alkyle, amino-C₂-C₄alkyle, acryloyle ou méthacryloyle.

8. Composition comprenant
a) une composition de manière susceptible d'être dégradé par la lumière, la chaleur ou l'oxydation ; et
b) le polymérisat (I), dans lequel A, B, R₁, R_{1'}, R_{1''}, R₂, R₃, Y, Z, les chiffres I, II et III et les indices p, q, r, x, y et z sont tels que définis selon la revendication 1.

9. Composition de pigments comprenant
a') 0,1-99,9% en poids de particules de pigments organiques ou inorganiques dispersables ; et
b') 0,1-99,9% en poids d'un polymérisat (I), dans lequel A, B, R₁, R_{1'}, R_{1''}, R₂, R₃, Y, Z, les chiffres I, II et III et les indices p, q, r, x, y et z sont tels que définis selon la revendication 1.

10. Composition selon la revendication 9, comprenant en outre des additifs choisis dans le groupe constitué par les agents tensioactifs, les agents de stabilisation à la lumière, les stabilisants anti-UV, les agents antimousse, les stabilisants de dispersion, les colorants, les plastifiants, les agents thixotropes, les catalyseurs de séchage, les agents anti-peau et les agents de nivellement.

11. Dispersion de pigments comprenant
a") des particules de pigments organiques ou inorganiques dispersées ; et
b") un agent de dispersion constitué d'au moins un polymérisat (I), où A, B, R₁, R₁, R_{1''}, R₂, R₃, Y, Z, les chiffres I, II et III et les indices p, q, r, x, y et z sont tels que définis selon la revendication 1 ; et
un véhicule liquide comprenant de l'eau, des solvants organiques et des mélanges de ceux-ci.

12. Utilisation de la dispersion de pigments selon la revendication 11, pour la préparation de compositions d'encre ou de filtres colorés.

13. Utilisation de la dispersion de pigments selon la revendication 11, pour la préparation de compositions de revêtement, d' impressions, d'images, d'encres, de laques, de plastiques pigmentés, d'adhésifs, de résines de cotxlëe, de composites chargés, de composites renforcés à fibres de verre, de stratifiés, de matériaux de construction à base de ciment tels que le plâtre et les colles à carrelage.
